# EUROPÄISCHE PATENTSCHRIFT

(11) **EP 4 124 449 B1**
(45) Veröffentlichungstag und Bekanntmachung des Hinweises auf die Patenterteilung: **15.10.2025**
(21) Anmeldenummer: 21188118.0
(22) Anmeldetag: 28.07.2021
(51) Int. Cl.: B31D 1/02, G09F 3/10

(54) **ETIKETT, ETIKETTENBAND UND VERFAHREN ZUM HERSTELLEN VON ETIKETTEN**
LABEL, LABELSTRIP AND METHOD FOR MANUFACTURING LABELS
ÉTIQUETTE, BANDE D'ÉTIQUETTES ET PROCÉDÉ DE FABRICATION D'ÉTIQUETTES

(43) Veröffentlichungstag der Anmeldung: 01.02.2023
(73) Patentinhaber: S+P Samson GmbH, 86438 Kissing (DE)
(72) Erfinder: TOCHTERMANN, Karl, 86932 Pürgen (DE); ARNDT, Roland, 86453 Dasing (DE)
(74) Vertreter: Vossius & Partner Patentanwälte Rechtsanwälte mbB

(56) Entgegenhaltungen:
- WO-A1-2012/123814
- AU-B3- 684 449
- GB-A- 2 288 162
- US-A- 5 351 426
- US-A1- 2003 091 817

## Beschreibung

Etiketten werden für eine Vielzahl von Anwendungen eingesetzt. Beispielsweise werden Etiketten zum Markieren von Gegenständen eingesetzt, um eine Kennzeichnung, Einordnung und/oder Sortierung der markierten Gegenstände zu erleichtern.

Um das Anbringen der Etiketten an unterschiedlichen Gegenständen zu erleichtern, werden Etiketten häufig mit einem Klebstoff versehen. Dadurch können derartige selbsthaftende Etiketten an Gegenständen haftend angebracht werden, so dass auf zusätzliche Verbindungsmittel verzichtet werden können.

Das Verwenden von Klebstoff bei derartigen selbsthaftenden Etiketten weist jedoch einige Nachteile im Hinblick auf die Herstellung und/oder Anwendung der Etiketten auf.

Beispielsweise kann der eingesetzte Klebstoff Maschinen und/oder Werkzeuge, die bei der Herstellung und/oder Verarbeitung der selbsthaftenden Etiketten eingesetzt werden, verunreinigen und/oder beschädigen. Dies kann beispielsweise dann vorkommen, wenn Teile des Etiketts geschnitten bzw. gestanzt werden, nachdem der Klebstoff bereits auf das Etikett aufgetragen wurde. Der Klebstoff kann beim Schneid- bzw. Stanzprozess das eingesetzte Scheid- bzw. Stanzwerkzeug verunreinigen und/oder beschädigen. Auch weitere Werkzeuge und/oder Maschinen zum Bearbeiten und/oder Handhaben der Etiketten, insbesondere nach dem Schneid- bzw. Stanzprozess, können durch den Klebstoff verunreinigt und/oder beschädigt werden.

Außerdem kann der Klebstoff auch bei der Anwendung der Etiketten im jeweiligen Anwendungsgebiet, beispielsweise zum Markieren von Gegenständen, Nachteile bewirken. Beispielsweise kann der Klebstoff über einen Rand des Etiketts hinausragen und/oder der Klebstoff kann sich an einem Rand des Etiketts sammeln, wodurch die Hände des Nutzers und/oder der Gegenstand, an dem das Etikett angebracht wurde, und/oder weitere Gegenstände verunreinigt und/oder in sonstiger Weise beeinträchtigt werden können.

Aus dem Stand der Technik sind bisher keine oder nur unzureichende Maßnahmen bekannt, um derartigen Nachteilen von mit Klebstoff versehenen selbsthaftenden Etiketten entgegenzuwirken.

Die US 5 351 426 A offenbart eine Etikettenanordnung, die die Ablösbarkeit einzelner Etiketten von einem Trägerblatt verbessert. Die Etiketten sind in Längsrichtung über die gesamte Länge des Trägerblatts verteilt. Ein Klebstoff hält die Etiketten vorübergehend auf dem Trägerblatt. Eine quer verlaufende Vorderkante jedes Etiketts ist kleberfrei.

Die GB 2 288 162 A offenbart eine selbstklebende Briefmarke bestehend aus: einer Schicht Briefmarkenpapier mit einem aufgedruckten Briefmarkenmotiv auf der Vorderseite und perforierten Rändern, einer Schicht druckempfindlichen Klebstoffs auf der Rückseite des Briefmarkenpapiers und einem abziehbaren Trägerblatt, das den Klebstoff abdeckt. Vorzugsweise handelt es sich bei dem Haftklebstoff um einen Schmelzklebstoff, und vorzugsweise wird der Klebstoff im Siebdruckverfahren aufgetragen. Zwischen dem Stempelpapier und der Haftklebeschicht kann eine Schicht aus anfeuchtbarem, wasserlöslichem Klebstoff angeordnet sein. Vorzugsweise reicht die Klebstoffschicht nicht bis zu den perforierten Rändern der Briefmarke, sondern lässt einen Rand frei. Solche Briefmarken werden nach einem Verfahren hergestellt, das die folgenden Schritte umfasst: Bereitstellen eines Blattes oder einer Bahn aus Briefmarkenpapier mit Perforationslinien, die darin Briefmarken definieren, gefolgt vom Beschichten der Rückseite des Briefmarkenpapiers mit einer Schicht aus druckempfindlichem Klebstoff und einem abziehbaren Trägerblatt.

Ferner offenbart die DE 195 01 380 A1 ein Etikett und ein Verfahren zum Herstellen des Etiketts mit einem reduzierten Ausbluten von Haftklebstoff. Dabei wird ein Verbund aus einem Trägerband und einer selbstklebend ausgestatteten ersten Folienbahn an einer ersten Stanze in kleinere Unterfolienabschnitte gestanzt. Über eine zweite Stanze wird eine weitere Folienbahn ebenfalls in kleinere Oberfolienabschnitte gestanzt, die größer sind als die Unterfolienabschnitte. Die Oberfolienabschnitte werden über die Unterfolienabschnitte gelegt. Dadurch sind die Oberfolienabschnitte zu allen Seiten hin größer dimensioniert als die Unterfolienabschnitte.

Beim beschriebenen Verfahren wird jedoch der Verbund aus dem Trägerband und der selbstklebend ausgestatteten ersten Folienbahn gestanzt, wodurch beim Stanzen, und möglicherweise auch beim Weiterverarbeiten der Etiketten, die eingesetzten Werkzeuge und/oder Maschinen durch Berührung mit dem Klebstoff verunreinigt und/oder beschädigt werden können.

Es ist eine Aufgabe der vorliegenden Erfindung, ein selbsthaftendes Etikett bzw. ein Verfahren zum Herstellen von selbsthaftenden Etiketten anzugeben, um die Nachteile des Standes der Technik zu überwinden und insbesondere die Handhabung von selbsthaftenden Etiketten zu erleichtern.

Diese Aufgabe wird durch die Gegenstände der unabhängigen Patentansprüche gelöst. Vorteilhafte Ausgestaltungen mit zweckmäßigen Weiterbildungen der Erfindung sind in den jeweiligen Unteransprüchen sowie in der nachfolgenden Beschreibung angegeben.

Ein erster Aspekt der Erfindung betrifft ein Verfahren zum Herstellen von Etiketten. Das Verfahren weist den Schritt a), bei dem eine Basismaterialbahn bereitgestellt wird.

Die Basismaterialbahn kann in Form eines Bandes bereitgestellt werden, welches vorzugsweise auf mindestens einer Rolle aufgewickelt ist und beim Bereitstellen der Basismaterialbahn von der Rolle abgewickelt wird. Im abgewickelten Zustand kann die Basismaterialbahn eine Länge in einer Längsrichtung der Basismaterialbahn von mindestens 10 m, bevorzugt mindestens 20 m, bevorzugter mindestens 50 m, bevorzugter mindestens 100 m, aufweisen. Ferner kann die Basismaterialbahn eine Endlosbahn sein.

Das Basismaterialbahn ist vorzugsweise flexibel und/oder biegsam, um deren Bearbeitung und/oder Transport, beispielsweise in der Form einer aufgewickelten Rolle, zu erleichtern.

Die Basismaterialbahn kann ein silikonhaltiges bzw. ein silikonisiertes Papier sein. Die Basismaterialbahn kann ein mehrschichtiger Verbund sein. Beispielsweise kann ein derartiger mehrschichtiger Verbund zumindest eine Silikonschicht aufweisen. Alternativ kann die Basismaterialbahn eine Kunststofffolie, vorzugsweise eine Folie aus Polyester und/oder mindestens einem Polyolefin, sein. Denkbar ist auch eine Folie aus Polypropylen (PP), Polyethylen (PE) und/oder Polyvinylchlorid (PVC). Die Basismaterialbahn kann synthetische und/oder natürliche Materialien aufweisen.

Vorzugsweise weist die Basismaterialbahn eine Dicke von 50 µm bis 200 µm, bevorzugt 50 µm bis 70 µm, bevorzugter 75 µm bis 150 µm, bevorzugter 100 µm bis 150 µm, auf.

Das Material der Basismaterialbahn kann eine relativ hohe Steifigkeit oder zumindest eine höhere Steifigkeit als eine oder mehrere der weiteren Komponenten des hergestellten Etiketts aufweisen, um die Handhabung und/oder Robustheit des Etiketts zu verbessern, beispielsweise durch eine ausreichend hohe Eigenspannung und/oder Rückstellkraft der Basismaterialbahn. Dadurch kann zusätzlich oder alternativ das Abschälverhalten des Etiketts, beispielsweise das Abschälverhalten der Basismaterialbahn von einer weiteren Komponente des Etiketts und/oder das Abschälverhalten einer weiteren Komponente des Etiketts von der Basismaterialbahn, verbessert werden.

Die Basismaterialbahn kann mittels mindestens einer Transportvorrichtung transportiert und bereitgestellt werden. Die Transportvorrichtung kann mindestens eine Antriebsvorrichtung aufweisen, welche die Transportvorrichtung antreiben und so die Basismaterialbahn bewegen kann. Die Transportvorrichtung kann hierzu eine Antriebsrolle aufweisen, die dazu eingerichtet ist, mit der Basismaterialbahn zusammenzuwirken und diese bewegend anzutreiben. Die Antriebsrolle kann durch die Antriebsvorrichtung der Transportvorrichtung angetrieben werden.

Außerdem kann die Basismaterialbahn über eine oder mehrere Umlenkrollen und/oder Führungsrollen geleitet und/oder dem Herstellungsprozess bereitgestellt werden.

Das Verfahren umfasst außerdem den Schritt b), bei dem mindestens ein Klebstoff mittels mindestens einer Auftragsvorrichtung auf die Basismaterialbahn entlang mindestens einer Reihe aufgetragen wird. Der Klebstoff wird intermittierend entlang der Reihe auf die Basismaterialbahn aufgetragen, so dass die Reihe mehrere einzelne Klebstoffbereiche aufweist, die jeweils durch klebstofffreie Bereiche voneinander beabstandet sind. Der Klebstoff ist ein Hotmelt-Klebstoff.

Der Klebstoff kann beispielsweise über einen Hotmelt-Auftragskopf als Auftragsvorrichtung auf die Basismaterialbahn aufgetragen werden. Alternativ kann die Auftragsvorrichtung eine Druckvorrichtung, beispielsweise eine Siebdruckvorrichtung, sein, die den Klebstoff auf die Basismaterialbahn aufdruckt. Denkbar ist auch das Verwenden mehrerer Auftragsvorrichtungen, beispielsweise mehrerer Hotmelt-Auftragsköpfe und/oder Druckvorrichtungen, die entweder zumindest teilweise zeitgleich oder zumindest teilweise nacheinander Klebstoff auf die Basismaterialbahn auftragen.

Die Auftragsvorrichtung kann mindestens eine Öffnung aufweisen, aus welcher der Klebstoff ausgegeben und auf die Basismaterialbahn aufgetragen werden kann. Vorzugsweise weist die Auftragsvorrichtung mehrere Öffnungen, die matrixartig, beispielsweise in einer Reihe oder in mehreren Reihen, angeordnet sein können.

Es kann eine Vielzahl von unterschiedlichen Klebstoffarten zum Auftragen auf die Basismaterialbahn verwendet werden. Außerdem kann der Klebstoff in unterschiedlichen Schichtdicken auf die Basismaterialbahn aufgetragen werden. Die Klebstoffarten und/oder die aufzutragende Schichtdicke des jeweiligen Klebstoffes können den Anforderungen an die Haftkraft des Klebstoffes und/oder den Eigenschaften des Gegenstands, an dem das Etikett angehaftet werden soll, und/oder den Beanspruchungen an der Verbindung zwischen dem Etikett und dem Gegenstand, an dem das Etikett anhaften soll, entsprechend gewählt und/oder angepasst werden. Beispielsweise kann bei Anwendungen für Gegenstände mit geringen Hafteigenschaften, beispielsweise bei Stahl bzw. Walzprodukten aus Stahl, Beton, Holz oder manchen Kunststoffen, ein Klebstoff mit einer stärkeren Haftkraft ausgewählt werden und/oder mit einer stärkeren Schichtdicke auf die Basismaterialbahn aufgetragen werden. Der Klebstoff wird mit einer Schichtdicke von 40 bis 200 µm auf die Basismaterialbahn aufgetragen. Die Auftragsvorrichtung kann dazu eingerichtet sein, die Schichtdicke des Klebstoffes zu variieren.

Der Klebstoff kann in mindestens einem Klebstoffvorrat gespeichert sein. Bei Bedarf, d.h. beim Auftragen und/oder vor dem Auftragen des Klebstoffes auf die Basismaterialbahn, kann der Klebstoff aus dem Klebstoffvorrat der Auftragsvorrichtung zugeführt werden.

Die Auftragsvorrichtung kann den Klebstoff reihenweise, d.h. entlang mindestens einer Reihe, auf die Basismaterialbahn auftragen. Der Klebstoff kann entlang jeder Reihe in, vorzugsweise vordefinierten, Zeitintervallen, d.h. diskontinuierlich bzw. intermittierend, entlang der Reihe auf die Basismaterialbahn aufgetragen werden. Dadurch kann reihenweise eine Vielzahl von einzelnen Klebstoffbereichen, die jeweils durch klebstofffreie Bereiche voneinander beabstandet sind, auf die Basismaterialbahn aufgetragen werden. Die Auftragsvorrichtung und die Basismaterialbahn können sich beim Auftragen des Klebstoffes auf die Basismaterialbahn relativ zueinander bewegen. Hierzu kann die Auftragsvorrichtung transportiert werden, beispielsweise mittels mindestens einer, vorzugsweise gesteuerten, Bewegungsvorrichtung, und/oder die Basismaterialbahn kann transportiert werden, beispielsweise mittels mindestens einer, vorzugsweise gesteuerten, Basismaterialbahn-Transportvorrichtung.

Die Klebstoffbereiche können jeweils eine im Wesentlichen einheitliche Form und/oder im Wesentlichen einheitliche Dimensionen aufweisen. Die Klebstoffbereiche können beliebige Formen und/oder Konturen aufweisen. Die Form und/oder Kontur der Klebstoffbereiche kann unter anderem von der Art und Weise des Auftragens des Klebstoffs und/oder von der Art der Auftragsvorrichtung abhängen. Vorzugsweise weisen die Klebstoffbereiche jeweils eine im Wesentlichen rechteckige Form auf, in Bezug auf eine Blickrichtung, die senkrecht zur Oberfläche der Basismaterialbahn, an der die Klebstoffbereiche angebracht sind, verläuft. Weitere Formen und/oder Konturen sind jedoch ebenfalls denkbar.

Das Verfahren umfasst außerdem den Schritt c), wonach ein Deckmaterial bereitgestellt wird. Das Deckmaterial kann in Form eines Bandes bereitgestellt werden, welches vorzugsweise auf einer Rolle aufgewickelt ist und beim Bereitstellen des Deckmaterials von der Rolle abgewickelt wird. Im abgewickelten Zustand kann das als Band ausgebildete Deckmaterial eine Länge in einer Längsrichtung des Deckmaterialbandes von mindestens 10 m, bevorzugt mindestens 20 m, bevorzugter mindestens 50 m, bevorzugter mindestens 100 m, aufweisen. Ferner kann das Deckmaterial in Form einer Bahn, vorzugsweise einer Endlosbahn, sein.

Das Deckmaterial ist vorzugsweise flexibel und/oder biegsam, um dessen Bearbeitung und/oder Transport, beispielsweise als in Form einer aufgewickelten Rolle, zu erleichtern.

Das Deckmaterial kann ein silikonhaltiges bzw. ein silikonisiertes Papier sein. Das Deckmaterial kann ein mehrschichtiger Verbund sein. Beispielsweise kann ein derartiger mehrschichtiger Verbund zumindest eine Silikonschicht aufweisen. Alternativ kann das Deckmaterial eine Kunststofffolie, vorzugsweise eine Folie aus Polyester und/oder mindestens einem Polyolefin, sein. Denkbar ist auch eine Folie aus Polypropylen (PP), Polyethylen (PE) und/oder Polyvinylchlorid (PVC). Das Deckmaterial kann synthetische und/oder natürliche Materialien aufweisen.

Vorzugsweise weist das Deckmaterial eine Dicke von 50 µm bis 200 µm, bevorzugter 75 µm bis 150 µm, bevorzugter 100 µm bis 150 µm, auf.

Das Deckmaterial kann auch eine relativ hohe Steifigkeit, oder zumindest eine höhere Steifigkeit als eine oder mehrere der weiteren Komponenten des Etiketts, aufweisen, um die Handhabung und/oder Robustheit des Etiketts zu verbessern, beispielsweise durch eine ausreichend hohe Eigenspannung und/oder Rückstellkraft des Deckmaterials. Dadurch kann auch das Abschälverhalten des Etiketts, beispielsweise das Abschälverhalten des Deckmaterials von einer weiteren Komponente des Etiketts, beispielweise von der Basismaterialbahn, oder das Abschälverhalten einer weiteren Komponente des Etiketts von dem Deckmaterial, verbessert werden.

Das Deckmaterial kann mittels mindestens einer Transportvorrichtung transportiert und bereitgestellt werden. Die Transportvorrichtung kann mindestens eine Antriebsvorrichtung aufweisen, welche die Transportvorrichtung antreiben und so das Deckmaterial bewegen kann. Die Transportvorrichtung kann hierzu eine Antriebsrolle aufweisen, die dazu eingerichtet ist, mit dem Deckmaterial zusammenzuwirken und dieses bewegend anzutreiben. Die Antriebsrolle kann durch die Antriebsvorrichtung der Transportvorrichtung angetrieben werden.

Außerdem kann das Deckmaterial über eine oder mehrere Umlenkrollen und/oder Führungsrollen geleitet und bereitgestellt werden.

Das Verfahren umfasst außerdem den Schritt d), wonach das Deckmaterial zumindest bereichsweise auf die Basismaterialbahn aufgebracht wird, so dass mehrere der aufgetragenen Klebstoffbereiche vollständig durch das Deckmaterial bedeckt sind.

Das Deckmaterial und die Basismaterialbahn, mit den darauf anhaftenden Klebstoffbereichen, werden vorzugsweise mittels mindestens einer Kaschiervorrichtung zu einem Verbund, der mindestens die Basismaterialbahn, den Klebstoff und das Deckmaterial aufweist, zusammenkaschiert.

Beim Aufbringen des Deckmaterials zumindest bereichsweise auf die Basismaterialbahn kann das Deckmaterial entlang einer Deckmaterial-Transportrichtung und die Basismaterialbahn entlang einer Basismaterialbahn-Transportrichtung bewegt werden, wobei die Deckmaterial-Transportrichtung und die Basismaterialbahn-Transportrichtung parallel und/oder koinzident zueinander verlaufen können. Alternativ kann das Deckmaterial stationär bleiben und die Basismaterialbahn kann bewegt werden, beispielsweise mittels mindestens einer Basismaterialbahn-Transportvorrichtung, oder die Basismaterialbahn kann stationär bleiben und das Deckmaterial kann bewegt werden, beispielsweise mittels mindestens einer Deckmaterial-Transportvorrichtung.

Das Deckmaterial kann, in Bezug auf eine vertikale Richtung, wenn die Fertigungsanlage zum Herstellen der Etiketten in einer Betriebsposition ist, von oben, von unten oder von einer Seite auf die Basismaterialbahn aufgebracht werden.

Dadurch, dass das Deckmaterial mehrere bzw. eine Vielzahl, d.h., mindestens 2, der aufgetragenen Klebstoffbereiche vollständig bedeckt, erstreckt sich das Deckmaterial ebenfalls über zumindest einen klebstofffreien Bereich, der zwischen den durch das Deckmaterial bedeckten Klebstoffbereichen angeordnet ist. Das Deckmaterial kann mehr als zwei Klebstoffbereiche bedecken, beispielsweise 3, 4, 5, 10, 15, 20 oder mehr Klebstoffbereiche. Das Deckmaterial kann außerdem klebstofffreie Bereiche, die nicht entlang der Reihe, d.h. nicht zwischen zwei benachbarten Klebstoffbereichen entlang der Reihe, angeordnet sind, zumindest teilweise bedecken. Beispielsweise kann das Deckmaterial klebstofffreie Bereiche bedecken, die seitlich neben der Reihe angeordnet sind, beispielsweise zwischen zwei Reihen, falls mehrere Reihen vorgesehen sind.

Das Verfahren umfasst vorzugsweise außerdem den Schritt e), wonach die Basismaterialbahn und/oder das Deckmaterial ausschließlich entlang von klebstofffreien Bereichen mittels mindestens einer Trennvorrichtung zumindest teilweise getrennt wird.

Vorzugsweise wird die Basismaterialbahn und/oder das Deckmaterial ausschließlich entlang von klebstofffreien Bereichen in einem Abstand von mindestens 0,25 mm, bevorzugt mindestens 0,5 mm, bevorzugter mindestens 1 mm, bevorzugter mindestens 1,5 mm, bevorzugter mindestens 2 mm, bevorzugter mindestens 3 mm, bevorzugter mindestens 4 mm, bevorzugter mindestens 6 mm, bevorzugter mindestens 8 mm, bevorzugter mindestens 10 mm, zu jedem Klebstoffbereich zumindest teilweise getrennt.

Vorzugsweise wird die Basismaterialbahn und/oder das Deckmaterial ausschließlich entlang von klebstofffreien Bereichen zumindest bereichsweise in einem Abstand von 0,25 mm bis 5 mm, bevorzugt von 0,5 mm bis 4 mm, bevorzugter von 0,5 mm bis 3 mm, bevorzugter von 0,5 mm bis 2 mm, zu einem Bereich der Klebstoffbereiche zumindest teilweise getrennt.

Trennen im Sinne der vorliegenden Erfindung kann ein vollständiges Trennen, d.h. ein vollständiges voneinander Abtrennen von jeweiligen Bereichen der Basismaterialbahn und/oder von jeweiligen Bereichen des Deckmaterials, oder nur ein bereichsweises und/oder punktweises Trennen, beispielsweise ein Perforieren, sein.

Vorzugsweise werden die Basismaterialbahn und das Deckmaterial zumindest teilweise gleichzeitig oder nacheinander zumindest teilweise getrennt.

Jedoch kann auch nur die Basismaterialbahn oder nur das Deckmaterial zumindest teilweise getrennt werden. Beispielweise kann die Trennvorrichtung nur in einen Bereich des Verbunds, der zumindest die Basismaterialbahn und das Deckmaterial umfasst, eintauchen und somit nur die Basismaterialbahn oder nur das Deckmaterial zumindest teilweise trennen, ohne dass die Basismaterialbahn und das Deckmaterial beide zumindest teilweise getrennt werden.

Die Trennvorrichtung kann beispielweise eine Stanzvorrichtung sein, die dazu eingerichtet ist, die Basismaterialbahn und/oder das Deckmaterial zu stanzen, um jeweilige Bereiche der Basismaterialbahn und/oder jeweilige Bereiche des Deckmaterials zumindest teilweise, vorzugsweise vollständig, voneinander zu trennen.

Die Basismaterialbahn und/oder das Deckmaterial kann im Wesentlichen quer, insbesondere im Wesentlichen quer zur Reihe bzw. Reihen von Klebstoffbereichen, entlang von klebstofffreien Bereichen zumindest teilweise getrennt werden. Alternativ oder zusätzlich kann die Basismaterialbahn und/oder das Deckmaterial längs, d.h. im Wesentlichen parallel zur Reihe bzw. Reihen von Klebstoffbereichen, entlang von klebstofffreien Bereichen zumindest teilweise getrennt werden.

Durch das zumindest teilweise Trennen der Basismaterialbahn und/oder des Deckmaterials ausschließlich entlang von klebstofffreien Bereichen liegt die Schnittkontur jedes einzelnen hergestellten Etiketts vollständig in Bereichen, in denen kein Klebstoff aufgetragen wurde. Dadurch kann ein Kontakt des Klebstoffs mit der Trennvorrichtung vermieden oder zumindest reduziert werden, um Verunreinigungen und/oder Beschädigungen der Trennvorrichtung, z.B. des Schneid- bzw. Stanzwerkzeugs, zu vermeiden oder zumindest zu reduzieren.

Auf Grund der dadurch bewirkten klebstofffreien Trennkanten der Basismaterialbahn und/oder des Deckmaterials können auch Verunreinigungen und/oder Beschädigungen weiterer Werkzeuge und/oder Maschinen zum Bearbeiten und/oder Handhaben der Etiketten, insbesondere nach dem Trennschritt, vermieden oder zumindest reduziert werden.

Durch das Trennen ausschließlich entlang von klebstofffreien Bereichen kann auch ein ungewolltes Fließen und/oder Verteilen und/oder Verschmieren des Klebstoffs, beispielsweise über einen Rand des Deckmaterials und/oder der Basismaterialbahn hinaus, vermieden oder zumindest reduziert werden.

Durch die geringeren Verunreinigungen und/oder Beschädigungen der entsprechenden Werkzeuge und/oder Maschinen können ebenfalls die Stillstandzeiten und/oder die Wartungs- und/oder Reparaturkosten zum Reinigen und/oder Reparieren der Werkzeuge und/oder Maschinen reduziert werden.

Häufig werden bei Etiketten mehrschichtige Verbundmaterialien verwendet. Beispielsweise kann die Basismaterialbahn ein mehrschichtiger Verbund sein, wobei der Verbund vorzugsweise zumindest eine Silikonschicht aufweist. Beim Trennen derartiger Verbundmaterialien mittels einer Trennvorrichtung, beispielsweise einer Stanzvorrichtung, können einzelne Schichten, beispielsweise die Silikonschicht, beeinträchtigt bzw. verletzt werden, so dass Klebstoff in den mehrschichtigen Verbund eintreten kann. Dies kann den mehrschichtigen Verbund beeinträchtigen. Beispielsweise können sich dadurch einzelne Schichten des Verbunds lösen. Dies kann Beschädigungen an entsprechenden Bearbeitungswerkzeuge und/oder Bearbeitungsmaschinen, und Stillstandzeiten derselben, verursachen. Diese Effekte können durch das Trennen ausschließlich entlang von klebstofffreien Bereichen vermieden oder zumindest reduziert werden.

Auf Grund der mittels des oben beschriebenen Herstellungsverfahrens erreichbaren klebstofffreien Trennkanten des hergestellten Etiketts und des geringeren Fließens und/oder der geringeren Verschmierung des Klebstoffs kann eine bessere Handhabbarkeit der Etiketten bei der Anwendung der Etiketten ermöglicht werden. Beispielsweise können dadurch Verunreinigungen und/oder sonstige Beeinträchtigungen von Gegenständen und/oder am Körper des Nutzers, insbesondere an den Händen des Nutzers, durch den Klebstoff vermieden oder zumindest reduziert werden. Dadurch kann die Nutzerfreundlichkeit der hergestellten Etiketten erhöht werden.

Außerdem kann dadurch eine automatische und zuverlässige Spendbarkeit der Etiketten ermöglicht werden. Insbesondere können dadurch Verschmutzungen und/oder Beschädigungen eines Etikettenspenders, der die hergestellten Etiketten zur Verwendung ausgeben kann, vermieden oder zumindest reduziert werden. Dies kann ebenfalls die Stillstandzeiten und/oder die Wartungs- und/oder Reparaturkosten des Etikettenspenders reduzieren.

Insgesamt kann die Handhabung der mittels des erfindungsgemäßen Verfahrens hergestellten selbsthaftenden Etiketten sowohl im Herstellungsverfahren als auch im Anwendungsfall, d.h., beim Anbringen auf Gegenstände, verbessert bzw. erleichtert werden.

Ferner kann durch das beschriebene Herstellungsverfahren, insbesondere durch das intermittierende Auftragen des Klebstoffs auf die Basismaterialbahn und das zumindest teilweise Trennen der Basismaterialbahn und/oder des Deckmaterials ausschließlich entlang von klebstofffreien Bereichen, eine relativ hohe Herstellungsgeschwindigkeit von selbsthaftenden Etiketten, mit vergleichsweise wenig und/oder weniger komplexen Herstellungsschritten im Vergleich zu den aus dem Stand der Technik bekannten Verfahren, realisiert werden.

Das Trennen der Basismaterialbahn und/oder des Deckmaterials mittels mindestens einer Trennvorrichtung kann zumindest zum Teil automatisch gesteuert werden, beispielsweise mit Hilfe eines vorgesehenen Steuergeräts. Hierzu kann zusätzlich mindestens ein Sensor, vorzugsweise ein optischer Sensor, vorgesehen sein. An dem Deckmaterial und/oder an der Basismaterialbahn kann mindestens eine Markierung vorgesehen sein. Der Sensor kann dazu eingerichtet sein, die Markierung, vorzugsweise optisch, zu detektieren und Informationen über die Position der Markierung an das Steuergerät bereitzustellen. Das Steuergerät kann eine Ausrichtung und/oder eine Positionierung der Trennvorrichtung(en) relativ zu dem Deckmaterial und/oder zur Basismaterialbahn steuern, zumindest teilweise basierend auf den bereitgestellten Informationen. Das Steuergerät kann dabei eine Ausrichtungsvorrichtung und/oder eine Positioniervorrichtung steuern, um die Trennvorrichtung(en) relativ zu dem Deckmaterial und/oder zur Basismaterialbahn auszurichten und/oder zu positionieren.

Es kann auch vorgesehen sein, dass der Sensor und das Steuergerät ohne derartige Markierungen eine Ausrichtung und/oder eine Positionierung der Trennvorrichtung(en) relativ zu dem Deckmaterial und/oder zur Basismaterialbahn steuern kann. Statt einer Markierung kann der Sensor alternative Merkmale detektieren und hierüber Informationen an das Steuergerät bereitzustellen, um eine Ausrichtung und/oder eine Positionierung der Trennvorrichtung(en) relativ zum Deckmaterial und/oder zur Basismaterialbahn zu steuern. Beispielsweise kann der Sensor dazu eingerichtet sein, die Ausrichtung und/oder Positionierung der Klebstoffbereiche zu detektieren und hierüber Informationen an das Steuergerät bereitzustellen. Das Steuergerät kann dazu eingerichtet sein, eine Ausrichtung und/oder eine Positionierung der Trennvorrichtung(en) relativ zum Deckmaterial und/oder zur Basismaterialbahn zu steuern, zumindest teilweise basierend auf den bereitgestellten Informationen.

Vorzugsweise wird die Basismaterialbahn mittels mindestens einer Transportvorrichtung zumindest abschnittsweise entlang einer Basismaterialbahn-Transportrichtung transportiert und/oder das Deckmaterial wird mittels mindestens einer Transportvorrichtung zumindest abschnittsweise entlang einer Deckmaterial-Transportrichtung transportiert.

Die Basismaterialbahn und das Deckmaterial können mittels einer gemeinsamen Transportvorrichtung oder mehrerer gemeinsamer Transportvorrichtungen transportiert werden. Alternativ können die Basismaterialbahn und das Deckmaterial mittels separater Transportvorrichtungen, vorzugsweise unabhängig voneinander, transportiert werden. Die Transportvorrichtung bzw. die Transportvorrichtungen kann bzw. können jeweils eine Antriebsrolle aufweisen, die jeweils mit der Basismaterialbahn und dem Deckmaterial zusammenwirkt und diese antreibt. Die Transportvorrichtung bzw. die Transportvorrichtungen kann bzw. können auch eine Vielzahl von Rollen aufweisen, von denen mindestens eine oder mehrere angetrieben werden.

Beim Schritt b) verläuft vorzugsweise die Reihe, entlang welcher der Klebstoff intermittierend auf die Basismaterialbahn aufgetragen wird, entlang der Basismaterialbahn-Transportrichtung.

Vorzugsweise verlaufen die Basismaterialbahn-Transportrichtung und die Deckmaterial-Transportrichtung zumindest abschnittsweise in einem Winkel von 30° bis 120°, bevorzugt von 40° bis 110°, bevorzugter von 50° bis 100°, bevorzugter von 60° bis 95°, bevorzugter von 70° bis 95°, zueinander.

Vorzugsweise wird vor Schritt d) die Basismaterialbahn mittels mindestens einer Umlenkvorrichtung von einer ersten Basismaterialbahn-Transportrichtung zu einer zweiten Basismaterialbahn-Transportrichtung umgelenkt, so dass die zweite Basismaterialbahn-Transportrichtung und die Deckmaterial-Transportrichtung nach dem Umlenken im Wesentlichen parallel zueinander verlaufen oder koinzident sind. Ergänzend oder alternative dazu wird vorzugsweise vor Schritt d) das Deckmaterial mittels mindestens einer Umlenkvorrichtung von einer ersten Deckmaterial-Transportrichtung zu einer zweiten Deckmaterial-Transportrichtung umgelenkt, so dass die zweite Deckmaterial-Transportrichtung und die Basismaterialbahn-Transportrichtung nach dem Umlenken im Wesentlichen parallel zueinander verlaufen oder koinzident sind.

Das Vorsehen mindestens einer Umlenkvorrichtung, vorzugsweise mehrerer Umlenkvorrichtungen, kann eine variable räumliche Anordnung und/oder Orientierung der für das Herstellungsverfahren verwendeten Maschine(n) und/oder Bearbeitungsstationen und/oder Werkzeuge ermöglichen. Mit anderen Worten können dadurch die zur Herstellung der Etiketten verwendeten Maschinen und/oder Bearbeitungsstationen und/oder Werkzeuge unabhängig von der vorgesehenen oder vorausgesetzten Orientierung und/oder Positionierung der Basismaterialbahn und/oder des Deckmaterials an den jeweiligen Bearbeitungsstationen zum Herstellen der Etiketten räumlich angeordnet werden, da die Umlenkvorrichtung die vorgesehene oder vorausgesetzte Orientierung und/oder Positionierung der Basismaterialbahn und/oder des Deckmaterials durch Umlenken derselben/desselben bewirken kann. Dadurch können die zur Herstellung der Etiketten verwendeten Maschinen und/oder Bearbeitungsstationen und/oder Werkzeuge beispielsweise kompakter und/oder platzeffizienter im Raum angeordnet werden.

Vorzugsweise verläuft zumindest vor dem Aufbringen des Deckmaterials im Schritt d) die Deckmaterial-Transportrichtung zumindest bereichsweise im Wesentlichen entgegen der Basismaterialbahn-Transportrichtung. Dadurch können die Basismaterialbahn und das Deckmaterial aus im Wesentlichen entgegengerichteten Richtungen zugeführt werden. Dies kann eine flexible und/oder unabhängige Führung der Basismaterialbahn und des Deckmaterials ermöglichen.

Alternativ oder zusätzlich können zumindest beim Aufbringen des Deckmaterials im Schritt d) die Deckmaterial-Transportrichtung und die Basismaterialbahn-Transportrichtung im Wesentlichen gleichgerichtet sein.

Das Deckmaterial kann längs entlang der Reihe bzw. Reihen von Klebstoffbereichen auf die Basismaterialbahn aufgebracht werden. Dabei kann das Deckmaterial eine geringere Breite quer zur Deckmaterial-Transportrichtung und/oder Basismaterialbahn-Transportrichtung aufweisen als die Basismaterialbahn, insbesondere wenn mehrere Reihen von Klebstoffbereichen nebeneinander auf die Basismaterialbahn aufgebracht werden. Dabei können mehrere Deckmaterialbahnen, insbesondere je eine Deckmaterialbahn pro Reihe von Klebstoffbereichen, nebeneinander, vorzugsweise im Wesentlichen parallel zueinander, auf die Basismaterialbahn aufgebacht werden. Alternativ kann das Deckmaterial quer zur Reihe bzw. Reihen von Klebstoffbereichen und/oder zur Deckmaterial-Transportrichtung und/oder Basismaterialbahn-Transportrichtung auf die Basismaterialbahn aufgebracht werden.

Vorzugsweise werden in Schritt d) mehrere Deckmaterialbahnen auf die Basismaterialbahn aufgebracht, so dass mehrere der aufgetragenen Klebstoffbereiche vollständig durch eine jeweilige Deckmaterialbahn bedeckt sind. Vorzugsweise werden die Deckmaterialbahnen im Wesentlichen parallel zueinander verlaufend auf die Basismaterialbahn aufgebracht.

Vorzugsweise wird beim Schritt b) der Klebstoff intermittierend auf die Basismaterialbahn entlang mindestens zwei, bevorzugt mindestens drei, bevorzugter mindestens vier, im Wesentlichen parallel zueinander verlaufender und voneinander durch klebstofffreie Bereiche beabstandeter Reihen aufgetragen. Jede Reihe weist vorzugsweise jeweils mehrere einzelne Klebstoffbereiche auf, die jeweils durch klebstofffreie Bereiche voneinander beabstandet sind. Die Reihen können nebeneinander, in Bezug auf eine Richtung quer zu den Reihen und/oder zur Deckmaterial-Transportrichtung und/oder Basismaterialbahn-Transportrichtung, auf die Basismaterialbahn aufgebracht werden. Die Reihen sind vorzugsweise durch klebstofffreie Bereiche voneinander beabstandet.

Die Reihen können im Schritt b) im Wesentlichen zeitgleich auf die Basismaterialbahn aufgebacht werden, d.h. ein Klebstoffbereich kann für jede vorgesehene Reihe im Wesentlichen zeitgleich auf die Basismaterialbahn aufgebracht werden. Alternativ können die Reihen nacheinander auf die Basismaterialbahn aufgebracht werden, d.h. die Klebstoffbereiche für eine Reihe werden intermittierend auf die Basismaterialbahn aufgebracht und anschließend, d.h. zeitversetzt, werden die Klebstoffbereiche für eine weitere Reihe intermittierend auf die Basismaterialbahn aufgebracht.

Vorzugsweise umfasst Schritt e) den folgenden Schritt bzw. die folgenden Schritte:
e1) die Basismaterialbahn und/oder das Deckmaterial werden, parallel zur Reihe verlaufend, außerhalb der Klebstoffbereiche zumindest teilweise, vorzugsweise vollständig, getrennt;
   und/oder
e2) die Basismaterialbahn und/oder das Deckmaterial werden, quer zur Reihe von Klebstoffbereichen verlaufend, außerhalb der Klebstoffbereiche zumindest teilweise, vorzugsweise vollständig, getrennt.

Durch die jeweiligen Trennverläufe, d.h. parallel zur Reihe und/oder quer zur Reihe von Klebstoffbereichen verlaufend, können die Kontur und/oder die Dimensionen und/oder weitere Eigenschaften, beispielsweise die Anzahl der Klebstoffbereiche pro Etikett, des hergestellten Etiketts bestimmt oder zumindest beeinflusst werden. Außerdem kann dadurch aus einem Etikettenband mit einer Mehrzahl von zusammenhängenden Etiketten, die beispielsweise matrixartig, vorzugsweise in mehreren Reihen, in dem Etikettenband angeordnet sein können, einzelne Etiketten herausgetrennt werden.

Die Schritte e1) und e2) können gleichzeitig oder nacheinander durchgeführt werden.

Die Basismaterialbahn kann ein Trennmaterial, vorzugsweise ein Silikonpapier, zum Abziehen von dem jeweiligen Klebstoffbereich oder den jeweiligen Klebstoffbereichen des hergestellten Etiketts sein und das Deckmaterial kann eine Kunststofffolie, vorzugsweise eine Folie aus Polyester und/oder mindestens einem Polyolefin, sein. Alternative kann die Basismaterialbahn eine Kunststofffolie, vorzugsweise eine Folie aus Polyester und/oder mindestens einem Polyolefin, sein und das Deckmaterial kann ein Trennmaterial, vorzugsweise ein Silikonpapier, zum Abziehen von dem jeweiligen Klebstoffbereich oder den jeweiligen Klebstoffbereichen des hergestellten Etiketts sein.

Bei der Anwendung des hergestellten Etiketts kann das Trennmaterial von dem jeweiligen Klebstoffbereich abgezogen werden, so dass der Klebstoffbereich an der Kunststofffolie verbleibt. Die Kunststofffolie mit dem daran anhaftenden Klebstoff in dem Klebstoffbereich kann anschließend auf einen Gegenstand haftend befestigt wird, beispielsweise um den Gegenstand zu markieren.

Vorzugsweise weist die Kunststofffolie, die als Basismaterialbahn oder als Deckmaterial ausgebildet sein kann, eine Dicke von 50 µm bis 200 µm, bevorzugter 75 µm bis 150 µm, bevorzugter 100 µm bis 150 µm, auf.

Das Material der Basismaterialbahn kann auch eine relativ hohe Steifigkeit oder zumindest eine höhere Steifigkeit als eine oder mehrere der weiteren Komponenten des Etiketts aufweisen, um die Handhabung und/oder Robustheit des herstellten Etiketts zu verbessern, beispielsweise durch eine ausreichend hohe Eigenspannung und/oder Rückstellkraft der Basismaterialbahn. Dadurch kann auch das Abschälverhalten des Etiketts, beispielsweise das Abschälverhalten der Basismaterialbahn von einer weiteren Komponente des Etiketts oder das Abschälverhalten einer weiteren Komponente des Etiketts von der Basismaterialbahn, verbessert werden.

Der Klebstoff kann auf der Basismaterialbahn eine größere Haftkraft aufweisen als auf dem Deckmaterial. Alternativ kann der Klebstoff auf dem Deckmaterial eine größere Haftkraft aufweisen als auf der Basismaterialbahn. Die Haftkraft kann zumindest teilweise durch die Oberflächenstruktur des Deckmaterials und/oder der Basismaterialbahn bestimmt werden. Somit kann die Oberflächenstruktur des Deckmaterials und/oder der Basismaterialbahn vordefiniert und/oder modifiziert, beispielsweise durch einen Behandlungsprozess, werden, um eine gewünschte und/oder erforderliche Haftkraft an dem Deckmaterial und/oder der Basismaterialbahn zu bewirken. Alternativ oder zusätzlich kann die Haftkraft des Klebstoffes zumindest teilweise durch dessen Zusammensetzung bestimmt werden.

Vorzugsweise kann vor Schritt d) das Deckmaterial in kleinere Deckmaterial-Segmente, vorzugsweise Deckmaterial-Streifen, derart geteilt werden, vorzugsweise quer zur Reihe von Klebstoffbereichen und/oder quer zur Deckmaterial-Transportrichtung und/oder quer zur Basismaterialbahn-Transportrichtung, dass die Deckmaterial-Segmente eine Breite in einer Breitenrichtung aufweisen, die von 1 mm bis 15 mm, bevorzugt von 2 mm bis 10 mm, größer ist als eine Breite der jeweiligen Klebstoffbereiche in derselben Breitenrichtung, nachdem das Deckmaterial auf die Basismaterialbahn aufgebracht wurde. Alternativ oder ergänzend kann vorzugsweise vor Schritt d) die Basismaterialbahn in kleinere Basismaterialbahn-Segmente, vorzugsweise Basismaterialbahn-Streifen, derart geteilt werden, dass die Basismaterialbahn-Segmente eine Breite in einer Breitenrichtung aufweisen, die von 1 mm bis 15 mm, bevorzugt von 2 mm bis 10 mm, größer ist als eine Breite der jeweiligen Klebstoffbereiche in derselben Breitenrichtung.

Das Bereitstellen von derartigen Deckmaterial-Segmenten bzw. Basismaterialbahn-Segmenten können die Flexibilität und/oder Variabilität beim Herstellen der Etiketten erhöhen.

Vorzugsweise kann sich die Breitenrichtung entlang der Reihe von Klebstoffbereichen und/oder entlang der Basismaterialbahn-Transportrichtung und/oder entlang der Deckmaterial-Transportrichtung erstrecken.

Vorzugsweise können die Deckmaterial-Segmente jeweils eine Längsachse aufweisen, wobei die Deckmaterial-Segmente, beim Schritt d), vorzugsweise derart auf die Basismaterialbahn und die Klebstoffbereiche aufgebracht werden, dass die Längsachsen der Deckmaterial-Segmente quer zur Reihe von Klebstoffbereichen und/oder quer zur Basismaterialbahn-Transportrichtung und/oder quer zur Deckmaterial-Transportrichtung verlaufen, nachdem die jeweiligen Deckmaterial-Segmente auf die jeweiligen Klebstoffbereiche aufgebracht wurden. Alternativ oder ergänzend können vorzugsweise die Basismaterialbahn-Segmente jeweils eine Längsachse aufweisen, die vorzugsweise entlang der Reihe von Klebstoffbereichen und/oder entlang der Basismaterialbahn-Transportrichtung und/oder entlang der Deckmaterial-Transportrichtung verlaufen.

Vorzugsweise kann zumindest vor Schritt e) mindestens ein Markierelement, vorzugsweise eine Mehrzahl von Markierelementen, auf die Basismaterialbahn und/oder auf das Deckmaterial aufgebracht werden, wobei das Trennen der Basismaterialbahn und/oder des Deckmaterials beim Schritt e) zumindest zum Teil anhand des Markierelements bzw. der Markierelemente gesteuert werden kann.

Das Trennen des Deckmaterials und/oder der Basismaterialbahn über die Klebstoffbereiche in Schritt e) kann zumindest zum Teil automatisch zumindest zum Teil mit Hilfe des Markierelements bzw. der Markierelemente gesteuert werden, beispielsweise mittels eines vorgesehenen Steuergeräts. Hierzu kann zusätzlich mindestens ein Sensor, vorzugsweise ein optischer Sensor, vorgesehen sein. Der Sensor kann dazu eingerichtet sein, das Markierelement bzw. die Markierelemente, vorzugsweise optisch, zu detektieren und Informationen über die Position und/oder Orientierung des Markierelements bzw. der Markierelemente an das Steuergerät bereitzustellen. Das Steuergerät kann eine Ausrichtung und/oder eine Positionierung der Trennvorrichtung(en) relativ zum Deckmaterial und/oder zur Basismaterialbahn steuern, zumindest teilweise basierend auf den bereitgestellten Informationen. Das Steuergerät kann dabei eine Ausrichtungsvorrichtung und/oder eine Positioniervorrichtung steuern, um die Trennvorrichtung(en) relativ zum Deckmaterial und/oder zur Basismaterialbahn auszurichten und/oder zu positionieren und anschließend das Deckmaterial und/oder die Basismaterialbahn zumindest teilweise zu trennen.

Der Sensor und das Steuergerät können alternativ auch ohne Markierelemente eine Ausrichtung und/oder eine Positionierung der Trennvorrichtung(en) relativ zum Deckmaterial und/oder zur Basismaterialbahn steuern. Statt eines Markierelements kann der Sensor alternative Merkmale detektieren und hierüber Informationen an das Steuergerät bereitzustellen, um eine Ausrichtung und/oder eine Positionierung der Trennvorrichtung(en) relativ zum Deckmaterial und/oder zur Basismaterialbahn zu steuern. Beispielsweise kann der Sensor dazu eingerichtet sein, die Ausrichtung und/oder Positionierung der aufgetragenen Klebstoffbereiche zu detektieren und hierüber Informationen an das Steuergerät bereitzustellen. Das Steuergerät kann dazu eingerichtet sein, eine Ausrichtung und/oder eine Positionierung der Trennvorrichtung(en) relativ zum Deckmaterial und/oder zur Basismaterialbahn zu steuern, zumindest teilweise basierend auf den bereitgestellten Informationen.

Vorzugsweise können die mittels des Verfahrens hergestellte Etiketten dazu geeignet sein, auf Stahl, Beton, Kunststoff und/oder Holz haftend appliziert zu werden.

Vorzugsweise wird beim Schritt a) die Basismaterialbahn von einer aufgewickelten Basismaterialbahnrolle abgewickelt und der Auftragsvorrichtung zugeführt. Alternative oder ergänzend wird vorzugsweise beim Schritt c) das Deckmaterial von einer aufgewickelten Deckmaterialrolle abgewickelt.

Vorzugsweise werden beim Schritt b) die Klebstoffbereiche in einem Abstand von 5 mm bis 30 mm, bevorzugter von 5 mm bis 20 mm, zueinander auf die Basismaterialbahn entlang der Reihe aufgetragen.

Vorzugsweise werden beim Schritt b) die Klebstoffbereiche in einem zeitlichen Abstand von 20 ms bis 1000 ms, bevorzugt von 20 ms bis 800 ms, bevorzugter von 20 ms bis 700 ms, bevorzugter von 30 ms bis 600 ms, bevorzugter von 40 ms bis 500 ms, bevorzugter von 50 ms bis 400 ms, bevorzugter von 60 ms bis 350 ms, bevorzugter von 60 ms bis 300 ms, bevorzugter von 60 ms bis 250 ms, intermittierend entlang der Reihe auf die Basismaterialbahn aufgetragen.

Ein zweiter Aspekt der Erfindung, der ebenfalls die eingangs genannte Aufgabe löst, betrifft ein Etikett, das ein Basismaterial mit mindestens einem Klebstoffbereich, an dem ein Klebstoff mit einer Schichtdicke von 40 bis 200 µm aufgetragen ist, und einen vollständig um den Klebstoffbereich herum verlaufenden klebstofffreien Rand, an dem kein Klebstoff aufgetragen ist, aufweist. Der Klebstoff ist ein Hotmelt-Klebstoff.

Das Etikett weist ferner ein Deckmaterial auf, welches den Klebstoffbereich vollständig bedeckt und zumindest einen Bereich des klebstofffreien Rands bedeckt und vorzugsweise mit zumindest einem Teil des klebstofffreien Rands bündig abschließt.

Die Vorteile, Merkmale und Ausführungen, die zu dem oben beschriebenen Verfahren zum Herstellen von Etiketten erläutert wurden, sind ebenfalls auf das Etikett anwendbar. Vorzugsweise weist der klebstofffreie Rand eine Breite auf, die sich, vorzugsweise senkrecht, von einer Kante des Basismaterials zum Klebstoffbereich erstreckt. Vorzugsweise beträgt die Breite von 0,5 mm bis 15 mm, bevorzugt von 1 mm bis 5 mm.

Vorzugsweise ist das Basismaterial ein Trennmaterial, vorzugsweise ein Silikonpapier, zum Abziehen von dem Klebstoffbereich des Etiketts und vorzugsweise ist das Deckmaterial eine Kunststofffolie, vorzugsweise eine Folie aus Polyester und/oder mindestens einem Polyolefin. Alternativ kann das Basismaterial eine Kunststofffolie, vorzugsweise eine Folie aus Polyester und/oder mindestens einem Polyolefin, sein und das Deckmaterial kann ein Trennmaterial, vorzugsweise ein Silikonpapier, zum Abziehen von dem Klebstoffbereich des Etiketts sein.

Vorzugsweise weist der Klebstoff auf dem Basismaterial eine größere Haftkraft auf als auf dem Deckmaterial. Alternativ kann der Klebstoff auf dem Deckmaterial eine größere Haftkraft aufweisen als auf dem Basismaterial.

Vorzugsweise kann das Etikett dazu geeignet sein, auf Stahl, Beton, Kunststoff und/oder Holz haftend appliziert zu werden.

Ein dritter Aspekt der Erfindung, der ebenfalls die eingangs genannte Aufgabe löst, betrifft ein Etikettenband mit einer Mehrzahl von zusammenhängenden einzelnen Etiketten. Das Etikettenband weist eine Basismaterialbahn mit mehreren bzw. einer Vielzahl von einzelnen, entlang mindestens einer Reihe angeordneten Klebstoffbereichen auf, an denen jeweils ein Klebstoff mit einer Schichtdicke von 40 bis 200 µm aufgetragen ist. Die Klebstoffbereiche sind durch klebstofffreie Bereiche voneinander beabstandet. Der Klebstoff ist ein Hotmelt-Klebstoff.

Außerdem weist das Etikettenband ein Deckmaterial auf, welches mindestens einen Klebstoffbereich vollständig bedeckt und an dem Klebstoffbereich anhaftet. Das Deckmaterial erstreckt sich zumindest über den Klebstoffbereich vollständig und über zumindest einen Bereich zumindest eines klebstofffreien Bereichs.

Vorzugsweise bedeckt das Deckmaterial mindestens zwei Klebstoffbereiche vollständig und haftet an den Klebstoffbereichen an. Vorzugsweise erstreckt sich das Deckmaterial vollständig zumindest über die zwei Klebstoffbereiche und über mindestens einen zwischen den zwei Klebstoffbereichen angeordneten klebstofffreien Bereich.

Aus dem Etikettenband können mehrere bzw. eine Vielzahl von einzelnen Etiketten in einem Trennschritt z.B. entsprechend dem oben beschriebenen Verfahren herausgetrennt werden, um so einzelne, separate Etiketten aus dem Etikettenband zu erhalten.

Vorzugsweise ist das Deckmaterial zumindest in einem Abschnitt des klebstofffreien Bereichs in einer Richtung, die von der Basismaterialbahn weggerichtet ist, gewölbt.

Derartige Wölbungen können als Indikator oder Referenz beim oben beschriebenen Trennschritt dienen, um beispielsweise eine Trennlinie entlang der klebstofffreien Bereiche anhand der Position und/oder Orientierung der Wölbungen zu positionieren. Dadurch kann ein präziseres und effizientes Trennen ermöglicht werden.

Vorzugsweise weist das Deckmaterial einzelne voneinander getrennte Deckmaterial-Segmente auf. Die Deckmaterial-Segmente können jeweils eine Längsachse aufweisen und können derart auf den Klebstoffbereichen angebracht sein, dass die Längsachsen der Deckmaterial-Segmente jeweils quer zur Reihe oder entlang der Reihe von Klebstoffbereichen verlaufen.

Vorzugsweise weist die Deckmaterial-Segmente eine Breite in einer Breitenrichtung auf, die von 1 mm bis 15 mm, bevorzugt von 2 mm bis 10 mm, größer ist als eine Breite der jeweiligen Klebstoffbereiche in derselben Breitenrichtung.

Vorzugsweise weisen die Klebstoffbereiche einen Abstand von 5 mm bis 30 mm, vorzugsweise von 5 mm bis 20 mm, zueinander auf.

Vorzugsweise weist die Basismaterialbahn mindestens zwei, vorzugsweise mindestens drei, vorzugsweise mindestens vier, Reihen von Klebstoffbereichen auf, entlang denen jeweils eine Vielzahl von einzelnen Klebstoffbereichen auf der Basismaterialbahn aufgetragen sind.

Vorzugsweise ist die Basismaterialbahn ein Trennmaterial, vorzugsweise ein Silikonpapier, zum Abziehen von dem jeweiligen Klebstoffbereich des jeweiligen Etiketts und das Deckmaterial ist vorzugsweise eine Kunststofffolie, vorzugsweise eine Folie aus Polyester und/oder mindestens einem Polyolefin. Alternativ kann die Basismaterialbahn eine Kunststofffolie, vorzugsweise eine Folie aus Polyester und/oder mindestens einem Polyolefin, sein und das Deckmaterial kann ein Trennmaterial, vorzugsweise ein Silikonpapier, zum Abziehen von dem jeweiligen Klebstoffbereich des jeweiligen Etiketts sein.

Vorzugsweise weist der Klebstoff auf der Basismaterialbahn eine größere Haftkraft auf als auf dem Deckmaterial. Alternativ kann der Klebstoff auf dem Deckmaterial eine größere Haftkraft aufweisen als auf der Basismaterialbahn.

Vorzugsweise sind die einzelnen Etiketten dazu geeignet, auf Stahl, Beton, Kunststoff und/oder Holz haftend appliziert zu werden.

Vorzugsweise ist das Etikettenband auf eine Basismaterialbahnrolle aufwickelbar ist.

Vorzugsweise weist das Etikettenband eine Länge entlang der Reihe von Klebstoffbereichen von mindestens 500 mm, bevorzugt mindestens 750 mm, bevorzugt mindestens 1000 mm, bevorzugt mindestens 2000 mm, bevorzugter 3000 mm, und eine Breite, die im Wesentlichen quer zur Länge verläuft, von 100 mm bis 500 mm, bevorzugt von 150 mm bis 450 mm, bevorzugter von 200 mm bis 400 mm, bevorzugter von 250 mm bis 350 mm, auf.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.
- Fig. 1: zeigt, in einer Draufsicht, eine Basismaterialbahn mit darauf aufgebrachten Klebstoffbereichen in einer ersten Variante;
- Fig. 2: zeigt, in einer Draufsicht, ein Etikettenband gemäß einem Aspekt der Erfindung mit der Basismaterialbahn aus Fig. 1 und einem zusätzlichen auf der Basismaterialbahn aufgebrachten Deckmaterial;
- Fig. 3: zeigt, in einer Draufsicht, ein Ausführungsbeispiel eines erfindungsgemäßen Etiketts, welches mit einem erfindungsgemäßen Verfahren hergestellt wurde;
- Fig. 4: zeigt, in einer Seitenansicht, das Etikett aus Fig. 3;
- Fig. 5: zeigt, in einer Draufsicht, eine Basismaterialbahn mit darauf aufgebrachten Klebstoffbereichen in einer weiteren Variante;
- Fig. 6: zeigt, in einer Draufsicht, ein Etikettenband gemäß einem Aspekt der Erfindung mit der Basismaterialbahn aus Fig. 5 und zusätzlichen auf der Basismaterialbahn aufgebrachten Deckmaterialstreifen;
- Fig. 7: zeigt, in einer Draufsicht, ein weiteres Ausführungsbeispiel von erfindungsgemäßen Etiketten, welche mit einem erfindungsgemäßen Verfahren hergestellt wurden;
- Fig. 8: zeigt, in einer Seitenansicht, die Etiketten aus Fig. 7.

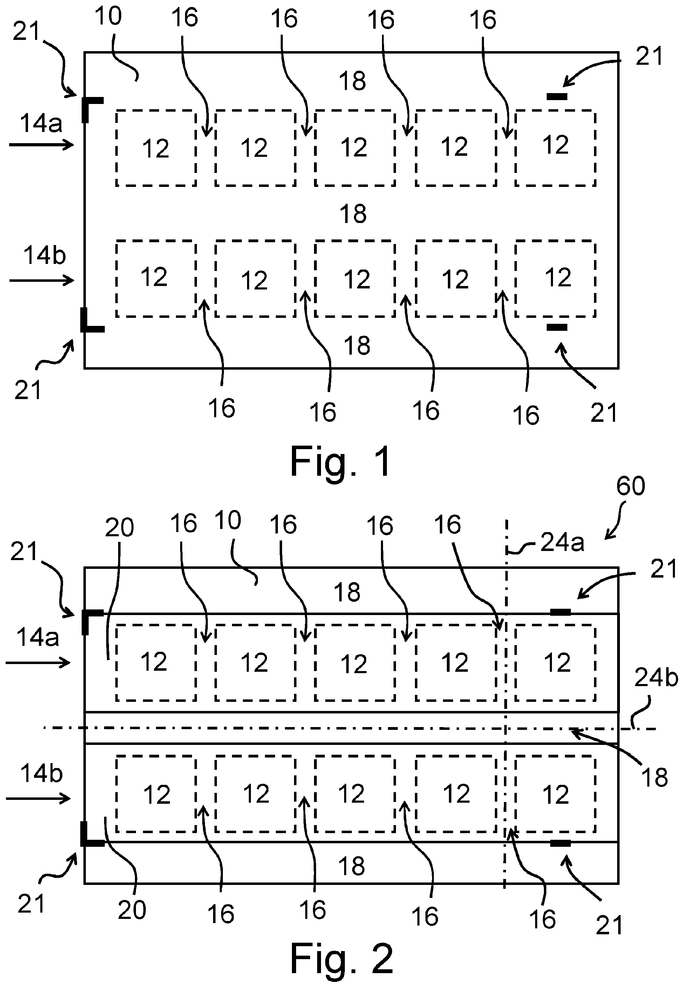

Fig. 1 und 2 zeigen eine Basismaterialbahn 10 mit darauf aufgebrachten Klebstoffbereichen 12, die jeweils einen Klebstoff haftend an der Basismaterialbahn 10 aufweisen. Die Klebstoffbereiche 12 sind in den Figuren gestrichelt dargestellt. Die Basismaterialbahn 10 ist vorzugsweise eine Endlosbahn. Vorzugsweise weist die Basismaterialbahn 10 eine Gesamtlänge von mindestens 10 m, bevorzugt mindestens 20 m, bevorzugter mindestens 50 m, bevorzugter mindestens 100 m, auf.

Die Basismaterialbahn 10 kann ein silikonhaltiges bzw. ein silikonisiertes Papier sein. Die Basismaterialbahn 10 kann ein mehrschichtiger Verbund sein. Beispielsweise kann die Basismaterialbahn 10 ein mehrschichtiger Verbund mit zumindest einer Silikonschicht sein. Alternativ kann die Basismaterialbahn 10 eine Kunststofffolie, vorzugsweise eine Folie aus Polyester und/oder mindestens einem Polyolefin, sein. Denkbar ist auch eine Folie aus Polypropylen (PP), Polyethylen (PE) und/oder Polyvinylchlorid (PVC). Die Basismaterialbahn 10 kann synthetische und/oder natürliche Materialien aufweisen.

Der Klebstoff an den Klebstoffbereichen 12 wird in einem erfindungsgemäßen Herstellungsverfahren mittels mindestens einer Auftragsvorrichtung (nicht dargestellt) auf die Basismaterialbahn 10 entlang zwei Reihen 14a, 14b, deren Verlauf in den Fig. 1 und 2 jeweils mit einem Pfeil gekennzeichnet ist, aufgetragen. Gemäß dem erfindungsgemäßen Herstellungsverfahren wird der Klebstoff intermittierend entlang den Reihen 14a, 14b auf die Basismaterialbahn 10 aufgetragen, so dass die Reihen 14a, 14b jeweils eine Vielzahl von einzelnen Klebstoffbereichen 12 aufweisen, die jeweils durch klebstofffreie Bereiche 16 voneinander beabstandet sind. Es können auch mehr als zwei Reihen, beispielsweise jeweils mindestens drei, vier oder fünf Reihen, von Klebstoffbereichen 12 auf die Basismaterialbahn 10 aufgebracht werden.

Die Klebstoffbereiche 12 sind in Fig. 1 und 2 rechteckig ausgebildet, in Bezug auf eine Blickrichtung, die senkrecht zur Oberfläche der Basismaterialbahn 10, an der die Klebstoffbereiche 12 angebracht sind, verläuft. Die Klebstoffbereiche 12 können jedoch auch alternative Formen und/oder Konturen aufweisen.

Die Reihen 14a, 14b von Klebstoffbereichen 12 sind nebeneinander und voneinander beabstandet angeordnet, d.h. die Reihen 14a, 14b von Klebstoffbereichen 12 sind quer zum Verlauf der Reihen 14a, 14b ebenfalls durch klebstofffreie Bereiche 18 voneinander beabstandet. Die Reihen 14a, 14b können im Wesentlichen zeitgleich auf die Basismaterialbahn 10 aufgebracht werden, d.h. ein Klebstoffbereich 12 kann für jede vorgesehene Reihe 14a, 14b im Wesentlichen zeitgleich auf die Basismaterialbahn 10 aufgebracht werden. Alternativ können die Reihen 14a, 14b nacheinander auf die Basismaterialbahn 10 aufgebracht werden, d.h., die Klebstoffbereiche 12 für eine erste Reihe 14a werden intermittierend auf die Basismaterialbahn 10 aufgebracht und anschließend, d.h., zeitlich versetzt, werden die Klebstoffbereiche 12 für eine weitere Reihe 14b intermittierend auf die Basismaterialbahn 10 aufgebracht.

In Fig. 2 ist zusätzlich gegenüber der Fig. 1 ein Deckmaterial 20 bereichsweise auf der Basismaterialbahn 10 angeordnet. Das Deckmaterial 20 kann beispielsweise von einer Rolle oder mehreren Rollen abgewickelt und bereitgestellt werden und mittels einer Vorrichtung, beispielsweise einer Kaschiervorrichtung, auf die Basismaterialbahn 10 aufgebracht werden.

Das Deckmaterial 20 bedeckt eine Vielzahl von den aufgetragenen Klebstoffbereichen 12 und den zwischen den Klebstoffbereichen 12 angeordneten klebstofffreien Bereichen 16 vollständig. Gemäß dem Ausführungsbeispiel aus Fig. 2 wird das Deckmaterial 20 mehrteilig der Basismaterialbahn 10 zugeführt und darauf aufgebracht. Das Deckmaterial 20 ist insbesondere streifen- bzw. bahnartig ausgebildet, wobei ein Streifen bzw. eine Bahn des Deckmaterials 20 jeweils eine Reihe 14a, 14b von Klebstoffbereichen 12 vollständig bedeckt. In anderen Worten, jeweils ein Streifen bzw. eine Bahn des Deckmaterials 20 bedeckt jeweils eine Reihe 14a, 14b von Klebstoffbereichen 12 vollständig.

Denkbar ist jedoch auch, das Deckmaterial 20 einteilig der Basismaterialbahn 10 zuzuführen und darauf aufzubringen. In diesem Fall würde das Deckmaterial 20 einteilig beide Reihen 14a, 14b von Klebstoffbereichen 12, bzw. mehrere Reihen von Klebstoffbereichen 12, vollständig bedecken.

Die Klebstoffbereiche 12 sind zwischen der Basismaterialbahn 10 und dem Deckmaterial 20 angeordnet. Somit liegen die Klebstoffbereiche 12, aus der Perspektive in Fig. 2, verdeckt unterhalb dem Deckmaterial 20.

Der Verbund umfassend mindestens die Basismaterialbahn 10, die Klebstoffbereiche 12 und das Deckmaterial 20 bildet ein Etikettenband 60, welches zu einzelnen Etiketten weiterverarbeitet werden kann.

Das Etikettenband 60 ist vorzugsweise vor und/oder nach dem Zusammensetzen bzw. Kaschieren des Etikettenbands 60 auf eine Rolle auf- und wieder abwickelbar. Dadurch kann das Etikettenband 60 transportiert werden, beispielsweise zu einem Abnehmer und/oder zu weiteren Bearbeitungsstationen.

In einem Schritt des erfindungsgemäßen Verfahrens wird die Basismaterialbahn 10 und das Deckmaterial 20, als Verbund, ausschließlich entlang von klebstofffreien Bereichen 16, 18 mittels mindestens einer Trennvorrichtung (nicht dargestellt) zumindest teilweise getrennt.

Beispielhafte Trennlinien 24a, 24b, entlang denen die Basismaterialbahn 10 und das Deckmaterial 20 zumindest teilweise getrennt werden, sind in Fig. 2 mit Punkt-Strich-Linien gekennzeichnet.

Die Trennlinie 24a verläuft im Wesentlichen quer zu den Reihen 14a, 14b der Klebstoffbereiche 12. Somit verläuft die Trennlinie 24a zum einen durch die klebstofffreien Bereiche 16, die zwischen den Klebstoffbereichen 12 einer jeweiligen Reihe 14a, 14b angeordnet sind, und zum anderen auch durch den klebstofffreien Bereich 18, der zwischen den Reihen 14a, 14b angeordnet ist. Die Trennlinie 24a entspricht somit einem Querschnitt des Etikettenbandes 60. In Fig. 2 ist der Übersichtlichkeit halber nur eine Trennlinie 24a zwischen zwei benachbarten Klebstoffbereichen 12 der jeweiligen Reihen 14a, 14b dargestellt. Es versteht sich jedoch, dass entlang der gesamten jeweiligen Reihe 14a, 14b die Basismaterialbahn 10 und das Deckmaterial 20 jeweils in den klebstofffreien Bereichen 16 getrennt werden können, d.h. entlang von jeweiligen Trennlinien 24a. Weitere Trennlinien 24a verlaufen vorzugsweise im Wesentlichen parallel zur in Fig. 2 abgebildeten Trennlinie 24a.

Die Trennlinie 24b verläuft im Wesentlichen parallel zu den Reihen 14a, 14b durch den klebstofffreien Bereich 18, der zwischen den Reihen 14a, 14b angeordnet ist. Die Trennlinie 24b entspricht somit einem Längsschnitt des Etikettenbandes 60. Obwohl in Fig. 2 lediglich eine Trennlinie 24b abgebildet ist, können auch weitere Trennlinien 24b vorgesehen sein, entlang denen die Basismaterialbahn 10 und das Deckmaterial 20 jeweils in den klebstofffreien Bereichen 18 zumindest teilweise getrennt werden können. Weiterer Trennlinien 24b verlaufen vorzugsweise im Wesentlichen parallel zur in Fig. 2 abgebildeten Trennlinie 24b.

Der Querschnitt, d.h. entlang der Trennlinie 24a, des Etikettenbandes 60 kann mittels einer Quertrennvorrichtung (nicht abgebildet) und der Längsschnitt, d.h. entlang der Trennlinie 24b, des Etikettenbandes 60 kann mittels einer Längstrennvorrichtung durchgeführt werden. Alternativ kann der Querschnitt und der Längsschnitt mittels einer gemeinsamen Trennvorrichtung durchgeführt werden.

Es sind jedoch denkbar auch alternative Trennlinien, die von den in Fig. 2 dargestellten Trennlinien 24a, 24b abweichen, denkbar, sofern die Trennlinien ausschließlich entlang von klebstofffreien Bereichen, beispielsweise den klebstofffreien Bereichen 16, 18, verlaufen.

Die Basismaterialbahn 10 weist mehrere Markierelemente 21 auf, um das Trennen der Basismaterialbahn 10 und des Deckmaterials 20 zum Teil anhand der Markierelemente 21, vorzugsweise zumindest teilweise automatisch, zu steuern. Hierzu kann ein Steuergerät (nicht abgebildet) vorgesehen sein, welches dazu eingerichtet ist, eine Ausrichtung und/oder eine Positionierung mindestens einer Trennvorrichtung relativ zum Deckmaterial 20 und zur Basismaterialbahn 10 zu steuern. Zusätzlich kann mindestens ein Sensor, vorzugsweise ein optischer Sensor, vorgesehen sein, der dazu eingerichtet ist, die Markierelemente 21, vorzugsweise optisch, zu detektieren und Informationen über die Position der Markierelemente 21 an das Steuergerät bereitzustellen. Das Steuergerät kann dazu eingerichtet sein, eine Ausrichtung und/oder eine Positionierung der Trennvorrichtung relativ zum Deckmaterial 20 und zur Basismaterialbahn 10 zu steuern, zumindest teilweise basierend auf den bereitgestellten Informationen. Das Steuergerät kann dabei eine Ausrichtungsvorrichtung und/oder eine Positioniervorrichtung steuern, um die Trennvorrichtung relativ zum Deckmaterial 20 und zur Basismaterialbahn 10 auszurichten und/oder zu positionieren.

Der Sensor und das Steuergerät können auch ohne Markierelemente 21 eine Ausrichtung und/oder eine Positionierung der Trennvorrichtung relativ zum Deckmaterial 20 und zur Basismaterialbahn 10 steuern. Statt der Markierelemente 21 kann der Sensor alternative Merkmale detektieren und hierüber Informationen an das Steuergerät bereitzustellen, um eine Ausrichtung und/oder eine Positionierung der Trennvorrichtung relativ zum Deckmaterial 20 und zur Basismaterialbahn 10 zu steuern. Beispielsweise kann der Sensor dazu eingerichtet sein, die Ausrichtung und/oder Positionierung der Klebstoffbereiche 12 zu detektieren und hierüber Informationen an das Steuergerät bereitzustellen. Das Steuergerät kann dazu eingerichtet sein, eine Ausrichtung und/oder eine Positionierung der Trennvorrichtung relativ zum Deckmaterial 20 und zur Basismaterialbahn 10 zu steuern, zumindest teilweise basierend auf den bereitgestellten Informationen.

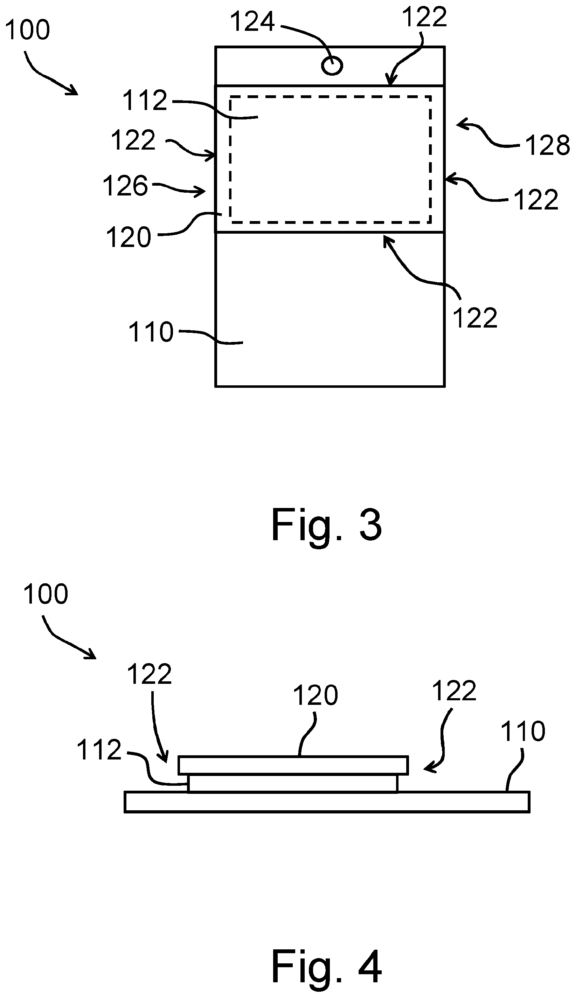

Fig. 3 und 4 zeigen ein Ausführungsbeispiel eines erfindungsgemäßen Etiketts 100, welches in einem Trennschritt des erfindungsgemäßen Verfahrens mittels mindestens einer Trennvorrichtung aus dem in Fig. 2 gezeigten Etikettenband 60 herausgetrennt wurde.

Das Etikett 100 weist ein Basismaterial 110 mit mindestens einem Klebstoffbereich 112 auf, an dem ein Klebstoff aufgetragen ist. Das Basismaterial 110 wurde aus der in Fig. 1 und 2 gezeigten Basismaterialbahn 10 herausgetrennt. Obwohl das in Fig. 3 und 4 abgebildete Etikett 100 lediglich einen Klebstoffbereich 112 aufweist, kann das Etikett 100 alternativ auch eine Vielzahl von Klebstoffbereichen 112 aufweisen.

Das Etikett 100 weist außerdem einen vollständig um den Klebstoffbereich 112 herum verlaufenden klebstofffreien Rand 122 auf, an dem kein Klebstoff aufgetragen ist. Der klebstofffreie Rand 122 umfasst einen Teil der in Fig. 1 und 2 gezeigten klebstofffreien Bereiche 16, die zwischen benachbarten Klebstoffbereichen 12 einer jeweiligen Reihe 14a, 14b angeordnet sind und diese voneinander beabstanden. Der klebstofffreie Rand 122 umfasst außerdem einen Teil der in Fig. 1 und 2 gezeigten klebstofffreien Bereiche 18, die zwischen den Reihen 14a, 14b der Klebstoffbereiche 12 angeordnet sind und diese voneinander beabstanden.

Das Etikett 100 weist außerdem ein Deckmaterial 120 auf, welches den Klebstoffbereich 112 vollständig bedeckt und zumindest einen Bereich des klebstofffreien Rands 122 bedeckt. Das Deckmaterial 120 wurde aus dem in Fig. 2 gezeigten Deckmaterial 20 herausgetrennt.

Der Klebstoffbereich 112 ist zwischen dem Basismaterial 110 und dem Deckmaterial 120 angeordnet. Somit liegt der Klebstoffbereich 112, aus der Perspektive in Fig. 3, verdeckt unterhalb dem Deckmaterial 120.

Das Basismaterial 110 weist außerdem eine Öffnung 124 auf, die beispielsweise ein Befestigungsmittel, zusätzlich zum Klebstoff, zum Befestigen des Etiketts 100 an Gegenständen dienen kann.

In den Bereichen 126, 128 schließt das Deckmaterial 120 bündig mit dem klebstofffreien Rand 122 des Basismaterials 110 ab (siehe Fig. 3). In Fig. 4 sind die Bereiche 126, 128 aus der Zeichenebene heraus bzw. in die Zeichenebene hinein gerichtet, sodass der bündige Abschluss des Deckmaterials 120 mit dem klebstofffreien Rand 122 des Basismaterials 110 in Fig. 4 nicht zu sehen ist.

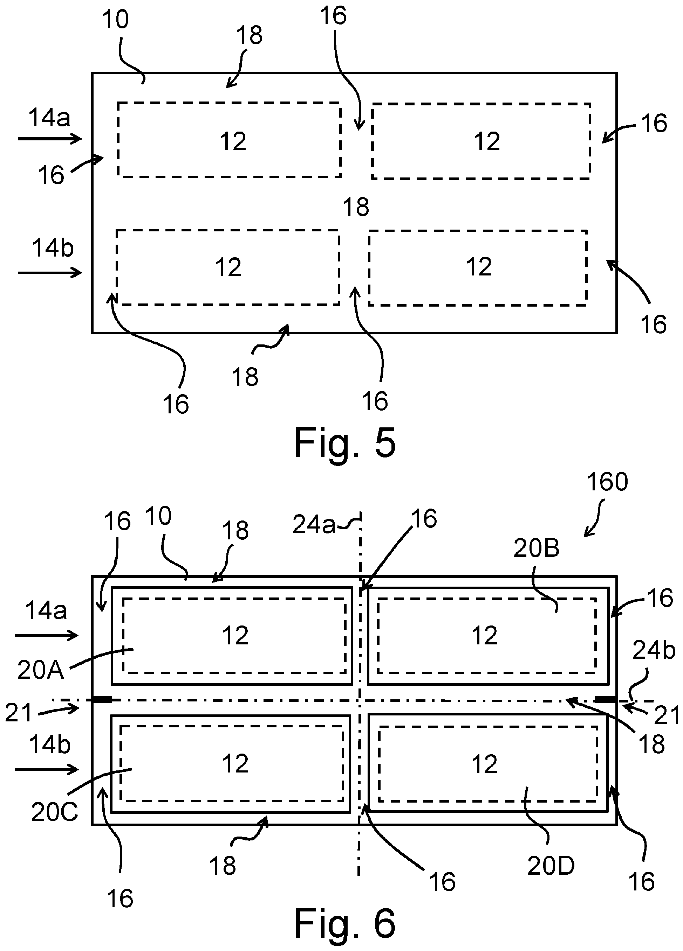

Fig. 5 und 6 zeigen eine weitere Variante zum Herstellen eines Etikettenbandes 160, das im Wesentlichen dieselben, oder zumindest ähnliche, Merkmale wie das Etikettenband 60 aus Fig. 2 aufweist. Dieselben, oder zumindest ähnliche, Merkmale sind in Fig. 5 und 6 deshalb mit denselben Bezugszeichen wie aus Fig. 1 und 2 versehen.

Im Gegensatz zum Etikettenband 60, weist das in Fig. 6 gezeigte Etikettenband 160 entlang den Reihen 14a, 14b der Klebstoffbereiche 12 mehrere Deckmaterialstreifen 20A, 20B, 20C, 20D auf. Jeder Deckmaterialstreifen 20A, 20B, 20C, 20D ist jeweils auf einem Klebstoffbereich 12 angeordnet. Das Deckmaterial 20 kann beispielsweise als Bahn bereitgestellt werden, die vor dem Zusammenführen, vorzugsweise Kaschieren, des Deckmaterials 20 mit der Basismaterialbahn 10 in die einzelnen Deckmaterialstreifen 20A, 20B, 20C, 20D getrennt wird, die anschließend mit der Basismaterialbahn 10 zusammengeführt, vorzugsweise kaschiert, werden können. Dadurch ist in einem Bereich der klebstofffreien Bereiche 16 kein Deckmaterial 20 angeordnet, wie in Fig. 6 zu sehen ist.

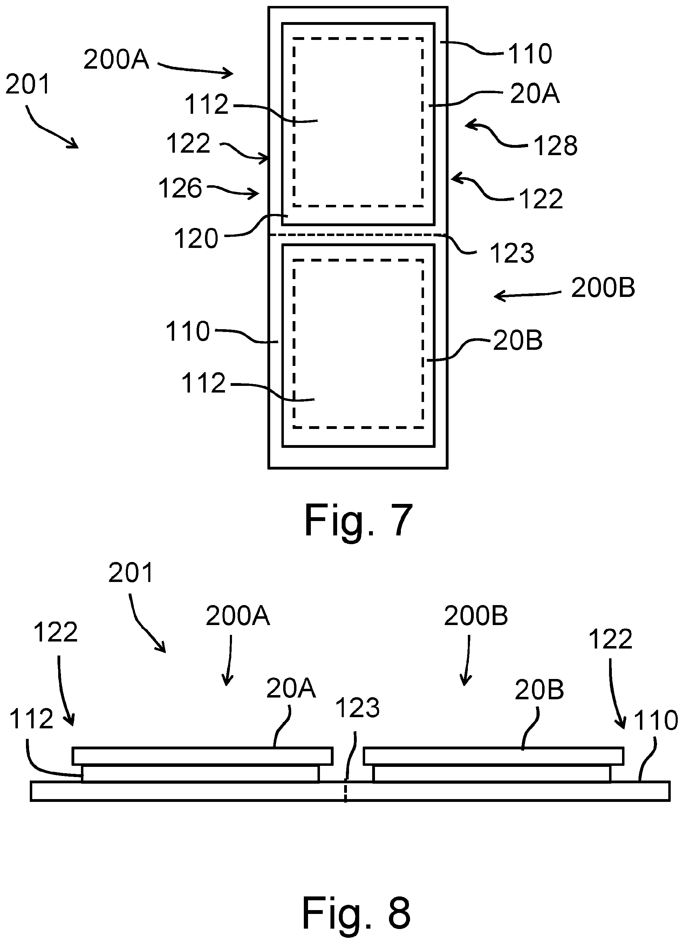

Fig. 7 und 8 zeigen ein weiteres Ausführungsbeispiel von erfindungsgemäßen Etiketten 200A, 200B, die in einem Trennschritt des erfindungsgemäßen Verfahrens mittels mindestens einer Trennvorrichtung aus dem in Fig. 6 gezeigten Etikettenband 160 herausgetrennt wurden.

Die in Fig. 7 und 8 gezeigten Etiketten 200A, 200B weisen im Wesentlichen dieselben, oder zumindest ähnliche, Merkmale wie das Etikett 100 aus den Fig. 3 und 4 auf. Dieselben, oder zumindest ähnliche, Merkmale sind in Fig. 7 und 8 deshalb mit denselben Bezugszeichen wie aus Fig. 3 und 4 versehen.

Im Gegensatz zum Etikett 100, welches als einzelnes Etikett vollständig aus dem Etikettenband 60 herausgetrennt wurde, sind die Etiketten 200A, 200B als Etikettenstreifen 201 mit einer Vielzahl von zumindest noch teilweise miteinander verbundenen Einzeletiketten 200A, 200B ausgebildet. In Fig. 7 sind zwei miteinander verbundene Einzeletiketten 200A, 200B gezeigt. Dies ist jedoch lediglich eine beispielhafte Darstellung. Es können auch mehr als nur zwei Einzeletiketten 200A, 200B in einem Etikettenstreifen 201 miteinander verbunden sein.

Zum Herstellen des Etikettenstreifens 201 kann, analog zum Etikett 100, das Etikettenband 160 entlang der Trennlinie 24b vollständig getrennt werden, um einzelne Etikettenstreifen 201 zu bilden. Im Gegensatz zum Etikett 100, welches unter anderem durch ein vollständiges Trennen entlang der Trennlinien 24a und 24b gebildet wurde, kann zur Herstellung der Etiketten 200A, 200B jedoch das Etikettenband 160 entlang der Trennlinie 24a lediglich perforiert werden, um eine Perforationslinie 203 zwischen den Etiketten 20A, 200B zu bilden.

Dadurch kann der Etikettenstreifen 201, vorzugsweise in einer Rolle aufgewickelt, beispielsweise in einem Etikettenspender angeordnet werden, um einzelne oder mehrere Etiketten 200A, 200B aus dem Etikettenspender zu entnehmen und entlang der Perforationslinie 203 abzureißen und entsprechend zu verwenden.

## Patentansprüche

1. Verfahren zum Herstellen von Etiketten (100, 200A, 200B), mit den folgenden Schritten:
a) Bereitstellen einer Basismaterialbahn (10);
b) Auftragen mindestens eines Klebstoffes mit einer Schichtdicke von 40 bis 200 µm mittels mindestens einer Auftragsvorrichtung auf die Basismaterialbahn (10) entlang mindestens einer Reihe (14a, 14b), wobei der Klebstoff intermittierend entlang der Reihe (14a, 14b) auf die Basismaterialbahn (10) aufgetragen wird, so dass die Reihe (14a, 14b) mehrere einzelne Klebstoffbereiche (12) aufweist, die jeweils durch klebstofffreie Bereiche (16) voneinander beabstandet sind, und wobei der Klebstoff ein Hotmelt-Klebstoff ist;
c) Bereitstellen eines Deckmaterials (20);
d) Aufbringen des Deckmaterials (20) zumindest bereichsweise auf die Basismaterialbahn (10), so dass mehrere der aufgetragenen Klebstoffbereiche (12) vollständig durch das Deckmaterial (20) bedeckt sind; und
e) zumindest teilweises Trennen der Basismaterialbahn (10) und/oder des Deckmaterials (20) ausschließlich entlang von klebstofffreien Bereichen (16, 18) mittels mindestens einer Trennvorrichtung.

2. Verfahren nach Anspruch 1, wobei die Basismaterialbahn (10) mittels mindestens einer Transportvorrichtung zumindest abschnittsweise entlang einer Basismaterialbahn-Transportrichtung transportiert wird, und wobei, beim Schritt b), die Reihe (14a, 14b), entlang welcher der Klebstoff intermittierend auf die Basismaterialbahn (10) aufgetragen wird, entlang der Basismaterialbahn-Transportrichtung verläuft.

3. Das Verfahren nach einem der vorhergehenden Ansprüche, wobei, in Schritt d), mehrere Deckmaterialbahnen (20) auf die Basismaterialbahn (10) aufgebracht werden, so dass mehrere der aufgetragenen Klebstoffbereiche (12) vollständig durch eine jeweilige Deckmaterialbahn (20) bedeckt sind, wobei die Deckmaterialbahnen (20) vorzugsweise im Wesentlichen parallel zueinander verlaufend auf die Basismaterialbahn (10) aufgebracht werden.

4. Verfahren nach einem der vorhergehenden Ansprüche, wobei, beim Schritt b), der Klebstoff intermittierend auf die Basismaterialbahn (10) entlang mindestens zwei, bevorzugt mindestens drei, bevorzugter mindestens vier, im Wesentlichen parallel zueinander verlaufender und voneinander durch klebstofffreie Bereiche beabstandeter Reihen (14a, 14b) aufgetragen wird, wobei jede Reihe (14a, 14b) jeweils mehrere einzelne Klebstoffbereiche (12) aufweist, die jeweils durch klebstofffreie Bereiche (16) voneinander beabstandet sind.

5. Verfahren nach einem der vorhergehenden Ansprüche, wobei Schritt e) den folgenden Schritt bzw. die folgenden Schritte aufweist:
e1) die Basismaterialbahn (10) und/oder das Deckmaterial (20) werden, parallel zur Reihe (14a, 14b) verlaufend, außerhalb der Klebstoffbereiche (12) zumindest teilweise, vorzugsweise vollständig, getrennt;
und/oder
e2) die Basismaterialbahn (10) und/oder das Deckmaterial (20) werden, quer zur Reihe (14a, 14b) von Klebstoffbereichen (12) verlaufend, außerhalb der Klebstoffbereiche (12) zumindest teilweise, vorzugsweise vollständig, getrennt.

6. Verfahren nach Anspruch 5, wobei die Schritte e1) und e2) gleichzeitig oder nacheinander durchgeführt werden.

7. Verfahren nach einem der vorhergehenden Ansprüche, wobei:
die Basismaterialbahn (10) ein Trennmaterial, vorzugsweise ein Silikonpapier, zum Abziehen vom jeweiligen Klebstoffbereich (12) oder den jeweiligen Klebstoffbereichen (12) des hergestellten Etiketts (100, 200A, 200B) ist und das Deckmaterial (20) eine Kunststofffolie, vorzugsweise eine Folie aus Polyester und/oder mindestens einem Polyolefin, ist;
oder
die Basismaterialbahn (10) eine Kunststofffolie, vorzugsweise eine Folie aus Polyester und/oder mindestens einem Polyolefin, ist und das Deckmaterial (20) ein Trennmaterial, vorzugsweise ein Silikonpapier, zum Abziehen von dem jeweiligen Klebstoffbereich (12) oder den jeweiligen Klebstoffbereichen (12) des hergestellten Etiketts (100, 200A, 200B) ist.

8. Verfahren nach einem der vorhergehenden Ansprüche, wobei, zumindest vor Schritt e), mindestens ein Markierelement (21), vorzugsweise eine Mehrzahl von Markierelementen, auf die Basismaterialbahn (10) und/oder auf das Deckmaterial (20) aufgebracht wird bzw. werden, wobei das Trennen der Basismaterialbahn (10) und/oder des Deckmaterials (20) beim Schritt e) zumindest zum Teil anhand des Markierelements bzw. der Markierelemente (21) gesteuert wird.

9. Verfahren nach einem der vorhergehenden Ansprüche, wobei:
beim Schritt a), die Basismaterialbahn (10) von einer aufgewickelten Basismaterialbahnrolle abgewickelt und der Auftragsvorrichtung zugeführt wird; und/oder,
beim Schritt c), das Deckmaterial (20) von einer aufgewickelten Deckmaterialrolle abgewickelt wird.

10. Verfahren nach einem der vorhergehenden Ansprüche, wobei, beim Schritt b), die Klebstoffbereiche (12) in einem Abstand von 5 mm bis 30 mm, vorzugsweise von 5 mm bis 20 mm, zueinander auf die Basismaterialbahn (10) entlang der Reihe (14a, 14b) aufgetragen werden.

11. Verfahren nach einem der vorhergehenden Ansprüche, wobei beim Schritt b), die Klebstoffbereiche (12) in einem zeitlichen Abstand von 20 ms bis 1000 ms, bevorzugt von 20 ms bis 800 ms, bevorzugter von 20 ms bis 700 ms, bevorzugter von 30 ms bis 600 ms, bevorzugter von 40 ms bis 500 ms, bevorzugter von 50 ms bis 400 ms, bevorzugter von 60 ms bis 350 ms, bevorzugter von 60 ms bis 300 ms, bevorzugter von 60 ms bis 250 ms, intermittierend entlang der Reihe (14a, 14b) auf die Basismaterialbahn (10) aufgetragen werden.

12. Etikett (100, 200A, 200B), aufweisend:
ein Basismaterial (110) mit mindestens einem Klebstoffbereich (112), an dem ein Klebstoff mit einer Schichtdicke von 40 bis 200 µm aufgetragen ist, und einen vollständig um den Klebstoffbereich (112) herum verlaufenden klebstofffreien Rand (122), an dem kein Klebstoff aufgetragen ist, wobei der Klebstoff ein Hotmelt-Klebstoff ist; und
ein Deckmaterial (120; 20A, 20B, 20C, 20D), welches den Klebstoffbereich (112) vollständig bedeckt und zumindest einen Bereich des klebstofffreien Rands (122) bedeckt.

13. Etikettenband (60; 160) mit einer Mehrzahl von zusammenhängenden einzelnen Etiketten (100, 200A, 200B), aufweisend:
eine Basismaterialbahn (10) mit mehreren einzelnen, entlang mindestens einer Reihe (14a, 14b) angeordneten Klebstoffbereichen (12), an denen jeweils ein Klebstoff mit einer Schichtdicke von 40 bis 200 µm aufgetragen ist, wobei die Klebstoffbereiche (12) durch klebstofffreie Bereiche (16) voneinander beabstandet sind, und wobei der Klebstoff ein Hotmelt-Klebstoff ist; und
ein Deckmaterial (20), welches mindestens einen Klebstoffbereich (12) vollständig bedeckt und an dem Klebstoffbereich (12) anhaftet, wobei sich das Deckmaterial (20) zumindest über den Klebstoffbereich (12) und über zumindest einen Bereich zumindest eines klebstofffreien Bereichs (16) erstreckt.

14. Etikettenband (60; 160) nach Anspruch 13, wobei die Basismaterialbahn (10) mindestens zwei, vorzugsweise mindestens drei, vorzugsweise mindestens vier, Reihen (14a, 14b) von Klebstoffbereichen (12) aufweist, entlang denen jeweils mehrere einzelne Klebstoffbereiche (12) auf der Basismaterialbahn (10) aufgetragen sind.

15. Etikettenband (60; 160) nach Anspruch 13 oder 14, wobei das Etikettenband (60; 160) in eine Basismaterialbahnrolle aufwickelbar ist und eine Länge entlang der Reihe (14a, 14b) von Klebstoffbereichen (12) von mindestens 500 mm, bevorzugt mindestens 750 mm, bevorzugt mindestens 1000 mm, bevorzugt mindestens 2000 mm, bevorzugter 3000 mm, und eine Breite, die im Wesentlichen quer zur Länge verläuft, von 100 mm bis 500 mm, bevorzugt von 150 mm bis 450 mm, bevorzugter von 200 mm bis 400 mm, bevorzugter von 250 mm bis 350 mm, aufweist.

## Claims

1. A method for manufacturing labels (100, 200A, 200B), the method comprising the following steps:
a) providing a base material web (10);
b) applying at least one an adhesive to the base material web (10) with a layer thickness of 40 to 200 µm along at least one row (14a, 14b) by means of at least one applicator, wherein the adhesive is applied to the base material web (10) intermittently along the row (14a, 14b) so that the row (14a, 14b) comprises a plurality of individual adhesive regions (12) each spaced apart from one other by adhesive-free regions (16), and wherein the adhesive is a hot melt adhesive;
c) providing a cover material (20);
d) applying the cover material (20) to at least some regions of the base material web (10) so that a plurality of the applied adhesive regions (12) are completely covered by the cover material (20); and
e) at least partially separating the base material web (10) and/or the cover material (20) exclusively along adhesive-free regions (16, 18) by means of at least one separating device.

2. The method according to claim 1, wherein the base material web (10) is transported by at least one transportation means at least in some sections along a transport direction of the base material web, and wherein in step b), the row (14a, 14b) along which the adhesive is applied intermittently to the base material web (10) extends along the transport direction of the base material web.

3. The method according to any one of the preceding claims, wherein in step d), a plurality of cover material webs (20) are applied to the base material web (10) so that a plurality of the applied adhesive regions (12) are completely covered by a respective cover material web (20), wherein the cover material webs (20) are applied to the base material web (10) preferably substantially parallel to one another.

4. The method according to any one of the preceding claims, wherein in step b), the adhesive is applied intermittently to the base material web (10) along at least two, preferably at least three, more preferably at least four rows (14a, 14b) which run substantially parallel to each other and are spaced apart from each other by adhesive-free regions, wherein each row (14a, 14b) comprises a plurality of individual adhesive regions (12) which are each spaced apart from each other by adhesive-free regions (16).

5. The method according to any one of the preceding claims, wherein step e) comprises the following step(s):
e1) running parallel to the row (14a, 14b), the base material web (10) and/or the cover material (20) are separated at least partially, preferably completely, outside the adhesive regions (12);
and/or
e2) running transversely to the row (14a, 14b) of adhesive regions (12), the base material web (10) and/or the cover material (20) are separated at least partially, preferably completely outside the adhesive regions (12).

6. The method according to claim 5, wherein steps e1) and e2) are performed simultaneously or successively.

7. The method according to any one of the preceding claims, wherein:
the base material web (10) is a release material, preferably a silicone paper, for pulling off from the respective adhesive region (12) or the respective adhesive regions (12) of the manufactured label (100, 200A, 200B), and the cover material (20) is a plastic film, preferably a film of polyester and/or at least one polyolefin;
or
the base material web (10) is a plastic film, preferably a film of polyester and/or at least one polyolefin, and the cover material (20) is a release material, preferably a silicone paper, for pulling off from the respective adhesive region (12) or the respective adhesive regions (12) of the manufactured label (100, 200A, 200B).

8. The method according to any one of the preceding claims, wherein, at least prior to step e), at least one marking element (21), preferably a plurality of marking elements, is/are applied to the base material web (10) and/or to the cover material (20), wherein the separation of the base material web (10) and/or the cover material (20) is controlled at least partially on the basis of the marking element or the marking elements (21) in step e).

9. The method according to any one of the preceding claims, wherein:
in step a), the base material web (10) is unwound from a wound base material web roll and fed to the applicator,
and/or
in step c), the cover material (20) is unwound from a wound cover material roll.

10. The method according to any one of the preceding claims, wherein, in step b), the adhesive regions (12) are applied to the base material web (10) along the row (14a, 14b) at a distance of 5 mm to 30 mm, preferably of 5 mm to 20 mm to each other.

11. The method according to any one of the preceding claims, wherein, in step b), the adhesive regions (12) are applied to the base material web (10) intermittently along the row (14a, 14b) at a time interval of 20 ms to 1000 ms, preferably of 20 ms to 800 ms, more preferably of 20 ms to 700 ms, more preferably of 30 ms to 600 ms, more preferably of 40 ms to 500 ms, more preferably of 50 ms to 400 ms, more preferably of 60 ms to 350 ms, more preferably of 60 ms to 300 ms, more preferably of 60 ms to 250 ms.

12. A label (100, 200A, 200B), comprising:
a base material (110) with at least one adhesive region (112) to which an adhesive with a layer thickness of 40 to 200 µm is applied, and an adhesive-free edge (122) extending completely around the adhesive region (112) and to which no adhesive is applied, wherein the adhesive is a hot melt adhesive; and
a cover material (120; 20A, 20B, 20C, 20D) which completely covers the adhesive region (112) and covers at least a region of the adhesive-free edge (122).

13. A label tape (60; 160) with a plurality of contiguous individual labels (100, 200A, 200B), comprising:
a base material web (10) with a plurality of individual adhesive regions (12) arranged along at least one row (14a, 14b), each adhesive region (12) having an adhesive with a layer thickness of 40 to 200 µm applied thereon, wherein the adhesive regions (12) are spaced apart from each other by adhesive-free regions (16), and wherein the adhesive is a hot melt adhesive; and
a cover material (20) which completely covers at least one adhesive region (12) and adheres to the adhesive region (12), wherein the cover material (20) extends at least over the adhesive region and over at least one region of at least one adhesive-free region (16).

14. The label tape (60; 160) according to claim 13, wherein the base material web (10) comprises at least two, preferably at least three, preferably at least four rows (14a, 14b) of adhesive regions (12) along each of which a plurality of individual adhesive regions (12) are applied to the base material web (10).

15. The label tape (60; 160) according to claim 13 or 14, wherein the label tape (60; 160) is windable into a base material roll and has a length along the row (14a, 14b) of adhesive regions (12) of at least 500 mm, preferably at least 750 mm, preferably at least 1000 mm, preferably at least 2000 mm, more preferably 3000 mm, and a width of 100 mm to 500 mm, preferably of 150 mm to 450 mm, more preferably of 200 mm to 400 mm, more preferably of 250 mm to 350 mm substantially transverse to the length.

## Revendications

1. Procédé de fabrication d'étiquettes (100, 200A, 200B), avec les étapes suivantes :
a) de fourniture d'une bande de matériau de base (10) ;
b) d'application d'au moins une colle avec une épaisseur de couche de 40 à 200 µm au moyen d'au moins un dispositif d'application sur la bande de matériau de base (10) le long d'au moins une rangée (14a, 14b), dans lequel la colle est appliquée par intermittence sur la bande de matériau de base (10) le long de la rangée (14a, 14b) de telle sorte que la rangée (14a, 14b) présente plusieurs zones de colle (12) individuelles qui sont espacées les unes des autres respectivement par des zones sans colle (16), et dans lequel la colle est une colle thermofusible ;
c) de fourniture d'un matériau de recouvrement (20) ;
d) d'application du matériau de recouvrement (20) au moins par endroits sur la bande de matériau de base (10) de telle sorte que plusieurs des zones de colle (12) appliquées sont complètement recouvertes par le matériau de recouvrement (20) ; et
e) de séparation au moins partielle de la bande de matériau de base (10) et/ou du matériau de recouvrement (20) exclusivement le long de zones sans colle (16, 18) au moyen d'au moins un dispositif de séparation.

2. Procédé selon la revendication 1, dans lequel la bande de matériau de base (10) est transportée au moins par endroits le long d'une direction de transport de bande de matériau de base au moyen d'au moins un dispositif de transport, et dans lequel, lors de l'étape b), la rangée (14a, 14b), le long de laquelle la colle est appliquée par intermittence sur la bande de matériau de base (10), s'étend le long de la direction de transport de bande de matériau de base.

3. Procédé selon l'une quelconque des revendications précédentes, dans lequel, dans l'étape d), plusieurs bandes de matériau de recouvrement (20) sont appliquées sur la bande de matériau de base (10) de telle sorte que plusieurs des zones de colle (12) appliquées sont complètement recouvertes par une bande de matériau de recouvrement (20) respective, dans lequel les bandes de matériau de recouvrement (20) sont appliquées de préférence sur la bande de matériau (10) de manière à s'étendre sensiblement parallèlement les unes par rapport aux autres.

4. Procédé selon l'une des revendications précédentes, dans lequel, lors de l'étape b), la colle est appliquée par intermittence sur la base de matériau de base (10) le long d'au moins deux, de manière préférée d'au moins trois, de manière davantage préférée d'au moins quatre, rangées (14a, 14b) s'étendant sensiblement parallèlement les unes par rapport aux autres et espacées les unes des autres par des zones sans colle, dans lequel chaque rangée (14a, 14b) présente chacune plusieurs zones de colle (12) individuelles, qui sont espacées les unes des autres respectivement par des zones sans colle (16).

5. Procédé selon l'une des revendications précédentes, dans lequel l'étape e) présente l'étape suivante ou les étapes suivantes :
e1) parallèlement à la rangée (14a, 14b), la bande de matériau de base (10) et/ou le matériau de recouvrement (20) sont séparés au moins en partie, de préférence complètement, à l'extérieur des zones de colle (12) ;
et/ou
e2) transversalement à la rangée (14a, 14b), la bande de matériau de base (10) et/ou le matériau de recouvrement (20) sont séparés au moins en partie, de préférence complètement, à l'extérieur des zones de colle (12) de zones de colle (12).

6. Procédé selon la revendication 5, dans lequel les étapes e1) et e2) sont mises en œuvre simultanément ou l'une après l'autre.

7. Procédé selon l'une quelconque des revendications précédentes, dans lequel :
le bande de matériau de base (10) est un matériau de séparation, de préférence un papier siliconé, destiné à être retiré de la zone de colle (12) respective ou des zones de colle (12) respectives de l'étiquette (100, 200A, 200B) fabriquée et le matériau de recouvrement (20) est un film en matière plastique, de préférence un film en polyester et/ou au moins en une polyoléfine ;
ou
la bande de matériau de base (10) est un film en matière plastique, de préférence un film en polyester et/ou au moins en une polyoléfine, et le matériau de recouvrement (20) est un matériau de séparation, de préférence un papier siliconé, destiné à être retiré de la zone de colle (12) respective ou des zones de colle (12) respectives de l'étiquette (100, 200A, 200B) fabriquée.

8. Procédé selon l'une des revendications précédentes, dans lequel, au moins avant l'étape e), au moins un élément de marquage (21), de préférence une pluralité d'éléments de marquage, est/sont appliqué(s) sur la bande de matériau de base (10) et/ou sur le matériau de recouvrement (20), dans lequel la séparation de la bande de matériau de base (10) et/ou du matériau de recouvrement (20) lors de l'étape e) est commandée au moins en partie à l'aide de l'élément de marquage ou des éléments de marquage (21).

9. Procédé selon l'une quelconque des revendications précédentes, dans lequel :
lors de l'étape a), la bande de matériau de base (10) est déroulée d'un rouleau de bande de matériau de base enroulé et est amenée au dispositif d'application ; et/ou
lors de l'étape c), le matériau de recouvrement (20) est déroulé d'un rouleau de matériau de recouvrement enroulé.

10. Procédé selon l'une quelconque des revendications précédentes, dans lequel, lors de l'étape b), les zones de colle (12) sont appliquées sur la bande de matériau de base (10) le long de la rangée (14a, 14b) à une distance les unes par rapport aux autres de 5 mm à 30 mm, de préférence de 5 mm à 20 mm.

11. Procédé selon l'une quelconque des revendications précédentes, dans lequel lors de l'étape b), les zones de colle (12) sont appliquées sur la bande de matériau de base (10) par intermittence le long de la rangée (14a, 14b) à un intervalle de temps de 20 ms à 1000 ms, de manière préférée de 20 ms à 800 ms, de manière davantage préférée de 20 ms à 700 ms, de manière davantage préférée de 30 ms à 600 ms, de manière davantage préférée de 40 ms à 500 ms, de manière davantage préférée de 50 ms à 400 ms, de manière davantage préférée de 60 ms à 350 ms, de manière davantage préférée de 60 ms à 300 ms, de manière davantage préférée de 60 ms à 250 ms.

12. Etiquette (100, 200A, 200B) présentant :
un matériau de base (110) avec au moins une zone de colle (112), sur laquelle une colle est appliquée avec une épaisseur de couche de 40 à 200 µm, et un bord sans colle (122) s'étendant complètement tout autour de la zone de colle (112), sur lequel aucune colle n'est appliquée, la colle étant une colle thermofusible ; et
un matériau de recouvrement (120 ; 20A, 20B, 20C, 20D), lequel recouvre complètement la zone de colle (112) et recouvre au moins une zone du bord sans colle (122).

13. Bande d'étiquettes (60 ; 160) avec une pluralité d'étiquettes (100, 200A, 200B) individuelles contiguës, présentant :
une bande de matériau de base (10) avec plusieurs zones de colle (12) individuelles disposées le long d'au moins une rangée (14a, 14b), sur chacune desquelles une colle est appliquée avec une épaisseur de couche de 40 à 200 µm, dans laquelle les zones de colle (12) sont espacées les unes des autres par des zones sans colle (16), et dans laquelle la colle est une colle thermofusible ; et
un matériau de recouvrement (20), lequel recouvre complètement au moins une zone de colle (12) et adhère sur la zone de colle (12), dans laquelle le matériau de recouvrement (20) s'étend au moins sur la zone de colle (12) et sur au moins une zone d'au moins une zone sans colle (16).

14. Bande d'étiquettes (60 ; 160) selon la revendication 13, dans laquelle la bande de matériau de base (10) présente au moins deux, de préférence au moins trois, de préférence au moins quatre, rangées (14a, 14b) de zones de colle (12), le long desquelles plusieurs zones de colle (12) individuelles sont respectivement appliquées sur la bande de matériau de base (10).

15. Bande d'étiquettes (60 ; 160) selon la revendication 13 ou 14, dans laquelle la bande d'étiquettes (60 ; 160) peut être enroulée en un rouleau de bande de matériau de base et présente une longueur le long de la rangée (14a, 14b) de zones de colle (12) d'au moins 500 mm, de manière préférée d'au moins 750 mm, de manière préférée d'au moins 1000 mm, de manière préférée d'au moins 2000 mm, de manière davantage préférée de 3000 mm, et une largeur, qui s'étend sensiblement transversalement par rapport à la longueur, de 100 mm à 500 mm, de manière préférée de 150 mm à 450 mm, de manière davantage préférée de 200 mm à 400 mm, de manière davantage préférée de 250 mm à 350 mm.
